(19) **Europäisches Patentamt**
**European Patent Office**
**Office européen des brevets**

(11) **EP 4 723 453 A1**

(12) **EUROPEAN PATENT APPLICATION**
published in accordance with Art. 153(4) EPC

(43) Date of publication:
08.04.2026 Bulletin 2026/15

(21) Application number: 23940429.6

(22) Date of filing: 07.11.2023

(51) International Patent Classification (IPC):
$H02M\ 1/00^{(2006.01)}$     $H02M\ 1/42^{(2007.01)}$
$H02M\ 1/088^{(2006.01)}$     $H02M\ 3/335^{(2006.01)}$
$H02M\ 3/00^{(2006.01)}$

(52) Cooperative Patent Classification (CPC):
H02M 1/00; H02M 1/088; H02M 1/42; H02M 3/00;
H02M 3/335

(86) International application number:
PCT/CN2023/130210

(87) International publication number:
WO 2024/250553 (12.12.2024 Gazette 2024/50)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 05.06.2023 CN 202310656954
28.09.2023 CN 202311279964

(71) Applicant: Shenzhen Contemporary E-energy
Technology Co.,
Limited
Shenzhen, Guangdong 518000 (CN)

(72) Inventors:
• SU, Xin
Shenzhen, Guangdong 518000 (CN)
• BI, Shuowei
Shenzhen, Guangdong 518000 (CN)

(74) Representative: Viering, Jentschura & Partner
mbB
Patent- und Rechtsanwälte
Am Brauhaus 8
01099 Dresden (DE)

(54) **THREE-PHASE-POWER-BASED POWER SUPPLY CIRCUIT AND METHOD FOR SAME TO REALIZE PFC/VOLTAGE BOOSTING/VOLTAGE REDUCTION**

(57) This present application discloses a power circuit based on three-phase power and a method for simultaneously implementing power factor correction and dynamic boosting/bucking adjustment. The circuit comprises an information acquisition module and a power circuit unit. The power circuit unit comprises three circuit groups connected to the three phases of the three-phase power, and a control center for managing the operating state of these circuit groups. Each circuit group includes an input rectifier module, an inductor, a capacitor, a switch and its controller, a transformer, and an output half-wave rectifier module. The output terminals of the three circuit groups included in the power circuit unit are connected in parallel or in series, thereby addressing ripple issues while improving power conversion rate. By adjusting the peak input current through high-frequency modulation, further tuning the operating frequency and duty cycle of the switch, and controlling the charge and discharge time of the inductors, the power circuit achieves power factor tracking while enabling dynamic adjustment of boosting/ducking voltage conversion to meet load requirements. This design effectively reduces costs, minimizes energy loss, and provides high power conversion rate.

EP 4 723 453 A1

*FIG.4*

**Description**

## TECHNICAL FIELD

The present application relates to the technical field of electric energy conversion, and in particular, to power circuit technology in a high-power scenario.

## BACKGROUND

In the existing technology, power modules used in high-power (typically defined as greater than 200 watts) or high-power scenarios consist of two-stage circuits. The front stage generally employs various topology circuits based on Boost rectifiers or equivalents of Boost circuits to achieve Power Factor Correction (PFC). The mainstream PFC topology solutions include the three-phase three-wire three-level Vienna (other examples include: two-channel interleaved parallel three-phase three-wire three-level Vienna, single-phase interleaved three-phase three-wire three-level Vienna), totem-pole topology circuits, and Boost circuits (examples also include: interleaved Boost circuits suitable for single-phase power). The rear-stage DC-DC conversion typically utilizes circuit topologies based on full-bridge configurations (for example: two sets of interleaved series two-level full-bridge LLC, two sets of interleaved parallel two-level full-bridge LLC, three-level phase-shifted full-bridge, two sets of two-level LLC full-bridges in series, two sets of two-level three-phase interleaved LLC in series, three-level LLC half/full-bridge, etc.) to achieve bucking/regulation.

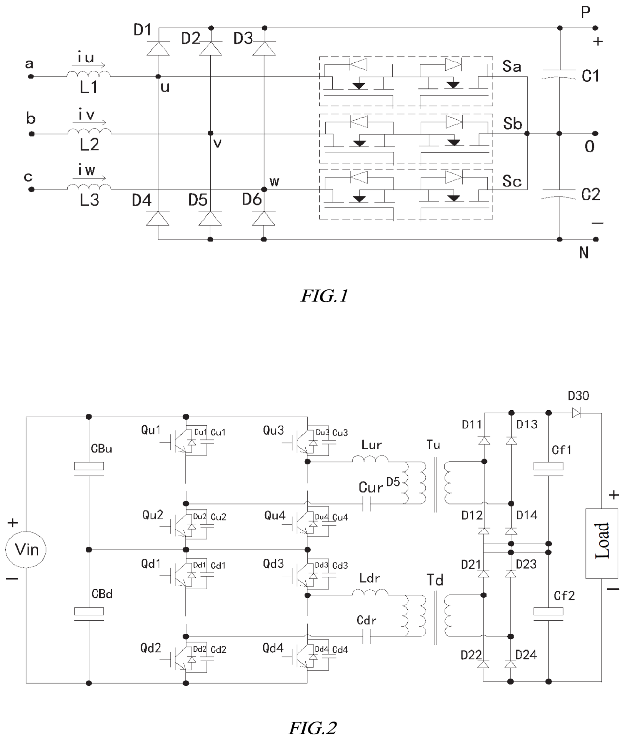

FIG. 1 is a schematic diagram of connection of a front-stage topology circuit of a power module for implementing PFC, specifically a three-phase three-wire three-level Vienna circuit, in the prior art. FIG. 2 is a schematic diagram of connection of a rear-stage DC/DC topology circuit of a power module for implementing voltage regulation/isolation of the power module, specifically two groups of interleaved series-connected two-level full-bridge LLC, in the prior art.

It can be seen that the power module in the prior art requires the front-stage circuit and the rear-stage circuit for implementing power conversion and transmission, with a large number of components and complex circuit connections. It suffers from issues such as high cost, significant energy loss, poor stability, low conversion efficiency, and poor scalability. Additionally, it requires increasing the capacitance value of the output capacitor to mitigate the ripple problem.

## SUMMARY

An objective of the present application is to provide a power circuit based on three-phase power and a method for simultaneously implementing power factor correction and dynamic boosting/bucking adjustment to address the issues in prior art power supply circuits, such as complex component connections, low power conversion rate, and weak scalability. Furthermore, it also mitigates the problem of relatively large line-frequency ripple associated with single-stage circuits.

The present application provides a power circuit based on three-phase power. The circuit comprises an information acquisition module and a power circuit unit. The power circuit unit comprises three circuit groups connected to the three phases of the three-phase power, and a control center for managing the operating state of these circuit groups.

Each circuit group includes an input rectifier module, an inductor, a capacitor, a switch and its controller, a transformer, and an output half-wave rectifier module. One end of the inductor is configured to connect to the live terminal of one phase of the three-phase power, and the other end of the inductor is connected to one end of the switch and one end of the capacitor. The other end of the capacitor is connected to one end of the primary winding of the transformer. The other end of the primary winding of the transformer and the other end of the switch are connected to the live terminal or the neutral terminal of another phase. The two output ends of the secondary winding of the transformer serve as the output ends providing electrical energy for the circuit group, wherein the end corresponding to the end of the primary winding connected to the capacitor is connected to the output half-wave rectifier module.

The output ends of the three circuit groups included in the power circuit unit, which correspond to the three-phase power, are connected in parallel.

The present application further provides a method for implementing power factor correction and dynamic boosting/bucking adjustment in the power circuit based on three-phase power, the method comprises:

step S1: obtaining a current actual input current value, a current actual input voltage value, a current actual output voltage value, and a current actual output current value at a high frequency;
step S2: comparing an obtained current actual output power with a target output power required by a connected load;
step S3: adjusting an input current peak at a high frequency based on a result of the comparison between the current actual output power and the target output power;
step S4: determining a target input current value at a high frequency based on the input current peak and current input phase information;
step S5: comparing the current actual input current value with the target input current value, and determining duty cycle and frequency adjustment instruction information for a switch at a high frequency based on a result of the comparison; and

step S6: executing, by the switch of a power circuit, the instruction information at a high frequency to control charge and discharge time of an inductor of the power circuit, so that the current actual input current value of the power circuit approaches the target input current value as much as possible.

Compared with the existing technology, the power circuit based on three-phase power of the present application comprises an information acquisition module and a power circuit unit. The power circuit unit comprises three circuit groups connected to the three phases of the three-phase power, and a control center for managing the operating state of these circuit groups. Each circuit group includes an input rectifier module, an inductor, a capacitor, a switch and its controller, a transformer, and an output half-wave rectifier module.

According to the method for implementing power factor correction and dynamic boosting/bucking adjustment in the power circuit based on three-phase power in the present application, a frequency and a duty cycle of the switch may be further adjusted by adjusting the input current peak at a high frequency, to control the charge and discharge time of the inductor, implementing power factor correction. In addition, dynamic boosting/bucking adjustment and high-frequency isolation are implemented based on an input voltage and a required output voltage of the power circuit, to meet a requirement of the load.

The present application achieves the functionalities in the traditional technology of both PFC and DC-DC conversion using a single-stage circuit. It integrates capabilities such as rectification, power factor correction, dynamic boosting/bucking adjustment, and high-frequency isolation. This design substantially reduces the number of components and improves power conversion rate. However, the single-stage circuit introduces the issue of significant low-frequency ripple.

Due to the working principles of the circuit groups included in the present application, these circuit groups support parallel combination of the output ends. This application employs a power circuit based on three-phase power to individually perform power factor correction for each phase of the three-phase power, and then parallelly connects and combines the output ends of the phases. This approach solves the problem of significant low-frequency ripple inherent in single-stage circuits. Furthermore, it does not introduce issues of power imbalance among the multiple circuit groups after parallel combination.

## BRIEF DESCRIPTION OF THE DRAWINGS

FIG. 1 is a schematic diagram of connection of a three-phase three-wire three-level Vienna circuit, a front-stage PFC topology circuit, of a power module circuit in the prior art;

FIG. 2 is a schematic diagram of connection of two groups of interleaved series-connected two-level full-bridge circuits, a rear-stage DC/DC topology circuit, of a power module circuit in the prior art;

FIG. 3 is a schematic diagram of connection of the power circuit unit according to an embodiment of the present application;

FIG. 4 is a schematic diagram of connection of the power circuit based on three-phase power to an embodiment of the present application.

FIG. 5-1 is a waveform diagram of the input inductor current of the power circuit when the input power is a single-phase sinusoidal wave.

FIG. 5-2 is a waveform diagram of the output voltage ripple corresponding to the input shown in FIG. 5-1.

FIG. 5-3 is a waveform diagram of the input inductor current of the power circuit when the input power is a three-phase sinusoidal wave.

FIG. 5-4 is a waveform diagram of the output voltage ripple corresponding to the input shown in FIG. 5-3 and a comparative schematic illustrating its difference from the output voltage ripple waveform shown in FIG. 5-2.

FIG. 6 is a flowchart of a method for implementing both power factor correction and dynamic boosting/bucking adjustment for a power circuit according to an embodiment of the present application.

## DETAILED DESCRIPTION OF EMBODIMENTS

To make a person skilled in the art better understand the technical solutions of the present application, the technical solutions in embodiments of the present application are described below clearly and completely with reference to the accompanying drawings in the embodiments of the present application. Apparently, the embodiments described are merely some rather than all of the embodiments of the present application.

All other embodiments obtained by a person of ordinary skill in the art based on the embodiments of the present application without creative efforts shall fall within the scope of protection of the present application.

It should be noted that the terms "first", "second", and the like in the description, claims, and accompanying drawings of the present application are intended to distinguish between similar objects but do not necessarily describe a specific order or sequence. It should be understood that data used in this way can be interchanged where appropriate, such that the embodiments of the present application described herein can be implemented in a sequence other than those illustrated or described herein.

In addition, the terms "include" and "have" and any variation thereof are intended to cover a non-exclusive inclusion, for example, a process, method, system, product, or device that includes a series of steps or units is not necessarily limited to those steps or units that are explicitly listed, but may include other steps or units not explicitly listed or inherent to such a process, method, product, or device.

The present application provides a power circuit based on three-phase power, to solve problems of high costs, low stability, great energy loss, low conversion rate, low scalability, and the presence of output ripple of a power circuit in the prior art caused by the use of a large number of components and complex connections.

A power circuit in the prior art is provided with a front-stage circuit and a rear-stage circuit, where the front-stage circuit implements power factor correction, and the rear-stage circuit implements bucking/regulation. The power circuit based on three-phase power disclosed in this embodiment includes at least one power circuit unit, which includes an inductor, a switch and its controller, a capacitor, and a transformer. By providing, in each power circuit unit, three circuit groups connected to three-phase power, and connecting output ends of the three circuit groups in parallel, ripple can be effectively reduced. In addition, the power circuit of the present application may include a plurality of power circuit units, in which case output ends of the plurality of power circuit units may be connected in series and/or in parallel, thereby enabling a wide output voltage and/or power range.

The present application provides a power circuit based on three-phase power, to solve problems of high costs, low stability, great energy loss, low conversion rate, and the presence of output ripple of a power circuit in the prior art caused by the use of a large number of components and complex connections.

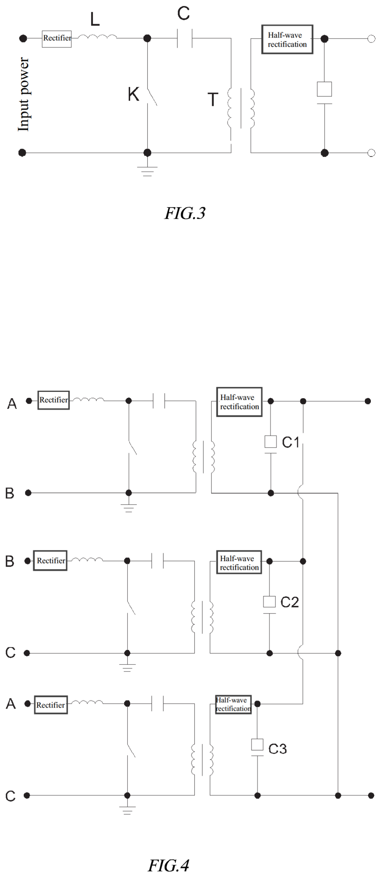

As shown in FIGS. 3-5, the present application provides a power circuit using three-phase power. The power circuit includes an information acquisition module and a power circuit unit. The power circuit unit includes three circuit groups connected to the three phases (A, B, C) of the three-phase power, and a control center for managing the operating state of these circuit groups;

Each circuit group comprises an input rectifier module, an inductor, a capacitor, a switch with its controller, a transformer, and an output half-wave rectifier module. One end of the inductor is configured to connect to the live terminal of one phase of the three-phase power, and the other end of the inductor is connected to one end of the switch and one end of the capacitor. The other end of the capacitor is connected to one end of the primary winding of the transformer. The other end of the primary winding of the transformer and the other end of the switch are connected to the live terminal or the neutral terminal of another phase. The two output ends of the secondary winding of the transformer serve as the output ends providing electrical energy for the circuit group, wherein the end corresponding to the end of the primary winding connected to the capacitor is connected to the output half-wave rectifier module.

The output ends of the three circuit groups included in the power circuit unit, which correspond to the three-phase power, are connected in parallel.

Specifically, in this embodiment, the power circuit unit in the power circuit have three circuit groups, wherein each circuit group is connected to a respective phase of the three-phase power. The power circuit may include a plurality of power circuit units, such that each phase of the three-phase power may be connected to multiple circuit groups. Operating modes or operating states of the plurality of power circuit units are identical, such that control logic for controlling and adjusting duty cycles and frequencies of switches in each power circuit unit is the same.

As shown in FIGS. 3-5, each circuit group comprises an input rectifier module, an inductor, a capacitor, a switch with its controller, a transformer, and an output half-wave rectifier module. One end of the inductor is configured to connect to the live terminal of one phase of the three-phase power, and the other end of the inductor is connected to one end of the switch and one end of the capacitor. The other end of the capacitor is connected to one end of the primary winding of the transformer. The other end of the primary winding of the transformer and the other end of the switch are connected to the live terminal or the neutral terminal of another phase. The two output ends of the secondary winding of the transformer serve as the output ends providing electrical energy for the circuit group, wherein the end corresponding to the end of the primary winding connected to the capacitor is connected to the output half-wave rectifier module.

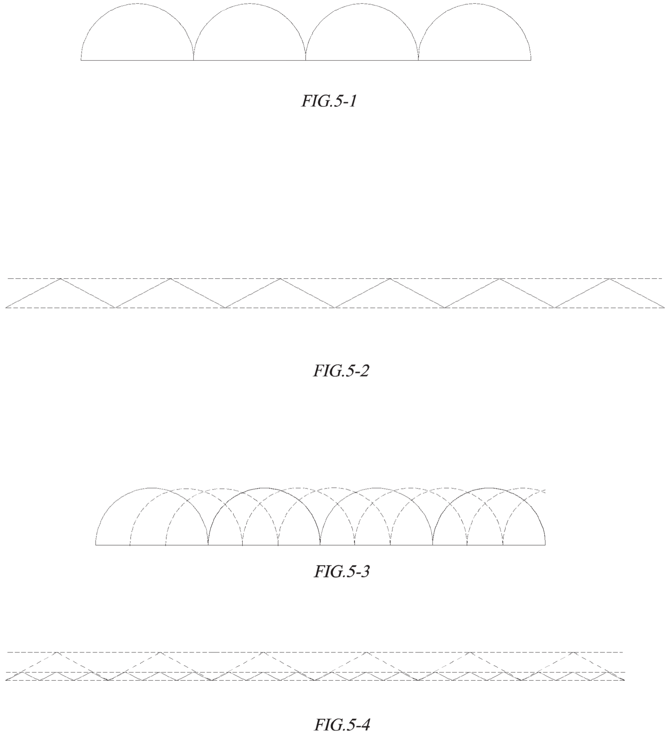

Specifically, each power circuit unit includes three circuit groups, and each circuit group is connected to a respective phase of the three-phase power. Two connection manners for connecting to the respective phases are provided. As shown in FIG. 4, in one connection manner, the three circuit groups of the power circuit unit are respectively connected to an AB phase, a BC phase, and an AC phase of the three-phase power A, B, and C, in which case an effective value of an input voltage supplied by the three-phase power to the power circuit is 380 V. As shown in FIG. 5, in another connection manner, the three circuit groups of the power circuit unit are respectively connected to a phase A and a neutral line (AN), a phase B and the neutral line (BN), and a phase C and the neutral line (CN) of the three-phase power A, B, and C, in which case the effective value of the input voltage supplied by the three-phase power to the power circuit is 220 V.

The output ends of the three circuit groups included in the power circuit unit, which correspond to the three-phase power, are connected in parallel.

Preferably, output ends of the three circuit groups corresponding to the three-phase power included in the power circuit unit are connected in parallel and then connected to a capacitor.

Specifically, in each power circuit unit, an input of each circuit group connected to a single-phase power or to one phase of the three-phase power is sinusoidal alternating current. After being rectified by a full-bridge rectifier module, the input is converted into a pulsating waveform and supplied to the inductor of the circuit group. Since the inductor of the circuit group has a power factor correction function (as described in detail in the following power factor correction process), the output voltage of the circuit group is a direct-current voltage corresponding to the input, superimposed with a fluctuation at 100 Hz. The 100 Hz fluctuation is caused by the pulsating waveform of the rectified input, and input power varies with a phase of the pulsating waveform. When the input voltage reaches a zero-crossing point, the output of the secondary-winding of the circuit group is also zero. At this time, the output of the circuit group is entirely provided by the output capacitor (for example, a filtering capacitor or an electrolytic capacitor) connected to the output end of the circuit group. Accordingly, the voltage of the output capacitor decreases, which causes the voltage supplied by the circuit group to a load, namely the capacitor voltage, to decrease, thereby resulting in significant output ripple.

When the three circuit groups are simultaneously connected to the three-phase power, the three phases of the three-phase power have a phase difference of 120°. As shown in FIG. 4, the power circuit unit includes three circuit groups whose output ends are respectively connected to three output capacitors C1, C2, and C3. Positive terminals of the three output capacitors are connected together to serve as one output end of the power circuit unit, and negative terminals of the three output capacitors are connected together to serve as another output end of the power circuit unit. Accordingly, the three circuit groups simultaneously charge the three output capacitors connected in parallel. After the output capacitors C1, C2, and C3 are connected in parallel and then coupled to a load, electrical energy is supplied to the load, thereby effectively reducing output ripple.

Alternatively, output ends of the three circuit groups of the power supply circuit unit may be directly connected in parallel and coupled to one or more output capacitors, which are further coupled to the load to supply electrical energy thereto, thereby also reducing output ripple. The output capacitor may be any one of an electrolytic capacitor, a film capacitor, or other suitable capacitors, and a specific form thereof is not limited, provided that energy storage can be achieved to satisfy output requirements of the circuit groups for supplying power to the load.

In this embodiment, due to a reduced number of components and high circuit stability, the circuit groups of the present application allow output ends of multiple circuit groups to be directly connected in parallel. By controlling switching operations of each circuit group using the power factor correction and dynamic boosting/bucking adjustment method disclosed herein, current sharing among the circuit groups having parallel-connected output ends can be ensured. Accordingly, excessive power imbalance among the circuit groups is avoided, thereby preventing damage to devices caused by large power differences between the circuit groups.

In practice, by implementing power factor correction independently on each phase of the three-phase power and connecting output ends in parallel after dynamically boosting/bucking adjustment, the present application ensures energy conversion efficiency of the power supply circuit while significantly reducing output ripple.

Preferably, the control center controls duty cycles and frequencies of switches in the circuit groups by transmitting control information to the switches.

when the switch in the corresponding circuit group is in a closed state, it forms a loop with the input power supply and the inductor of the connected phase, thereby charging the inductor; and the capacitor, together with the switch and the inductor of the primary winding transformer, forms an LC resonant circuit, so the energy stored in the capacitor is transferred between the primary winding of the transformer and the capacitor;
when the switch is in an open state, it forms an LLC resonant circuit with the input power supply, the inductor, the capacitor and the primary winding of the transformer of the connected phase. The input power supply of the connected phase and the charged inductor recharge the capacitor, while the charged inductor simultaneously superimposes its own energy on the energy stored in the primary winding of the transformer. Through the change in current in the primary winding of the transformer, electrical energy is induced into the secondary winding.

Specifically, as shown in FIGS. 3-5, a specific working principle and process of one circuit group in a power circuit unit connected to three-phase power is as follows:
The control center transmits control information including a duty cycle and a frequency to the switch, so as to control the proportion of time during which the switch in the circuit group remains in a closed state within a switching period; when the switch in the corresponding circuit group is in a closed state, it forms a loop with the input power supply and the inductor of the connected phase, thereby charging the inductor; and the capacitor, together with the switch and the inductor of the primary winding transformer, forms an LC resonant circuit; when the switch is in an open state, it forms an LLC resonant circuit with the input power supply, the inductor, the capacitor and the primary winding of the transformer of the connected phase. The input power supply of the connected phase and the charged inductor recharge the capacitor, while the charged inductor simultaneously superimposes its own energy on the energy stored in the primary winding of the transformer. Through the change in current in the primary winding of the transformer, electrical energy is induced into the secondary winding.

Specifically, as shown in FIGS. 3-5, the control center controls frequencies and duty cycles of switches in each of the three circuit groups according to power demand required at the output end of the power circuit unit. As shown in FIG. 3, when a switch K of a circuit group is in a closed state, the switch K, an input power supply, and an inductor L form a loop, such that the input power supply charges the inductor L through the loop. At this time, a capacitor C of the circuit group forms an LC resonant loop with the switch K and a primary winding inductor of a transformer T.

When the switch K is in an open state, the input power supply, the inductor L, the capacitor C, and the primary winding inductor of the transformer T form an LLC resonant loop. The input power supply connected with the corresponding phase and the charged inductor L charge the capacitor C, and the charged inductor simultaneously superimposes its own energy on the energy stored in the primary winding of the transformer. Through the change in current in the primary winding of the transformer, electrical energy is induced into the secondary winding.

In the circuit group disclosed in this embodiment, by controlling an operating state of a switch K, an inductor L is charged and then discharges to a capacitor C and the primary winding of a transformer T, such that the primary winding of the transformer T receives energy and induces the energy to a secondary winding of the transformer T, thereby further outputting electrical energy. By controlling the frequency and the duty cycle of the switch K, charging and discharging time of the inductor L and the primary winding inductor of the transformer are controlled, thereby further controlling the amount of electrical energy output from the secondary winding of the transformer. Compared with the prior art, the embodiment enables electrical energy transfer to be achieved using a power circuit with a reduced number of components, and accordingly provides advantages including low cost, high stability, and high conversion rate.

Specifically, with continued reference to FIG. 3, a detailed operating process of the circuit groups of the power circuit unit disclosed in this embodiment is described as follows:

When the switch K is in a closed state, an input power supply charges an inductor L, and the inductor L stores energy. At a moment when the switch K is opened, in order to maintain continuity of current at two ends thereof, the inductor L generates a high voltage. As a result, a new loop 1 (input power supply + inductor L + capacitor C + transformer T) is formed after the switch K is in an open state. Through the loop 1, electrical energy is transferred, the input power supply, the inductor L and the primary winding of the transformer T discharge to charge the capacitor C and to induce energy to the secondary winding of the transformer T by changes in currents in the primary windings of the transformer T. At this time, a relationship among voltages satisfies: $V_{input} + V_L = V_C + V_{Tprimary}$; the transformer T induces electrical energy to its secondary winding, and the secondary winding outputs the electrical energy to the output end of the power circuit unit by the half-wave rectifier modules, to provide the electric energy to the load.

When the switch K is switched from the open state to the closed state, the process of loops sequentially formed in the power circuit unit is as follows:

The power circuit unit charges the inductor L through the loop 2 (input power source + inductor L + switch K), and charge the capacitor C and the primary winding of the transformer T through the loop 1 (input power supply + inductor L + capacitor C + transformer T). After the capacitor C finished charging, in order to maintain continuity of voltage across its two ends, the capacitor C charges the primary winding of the transformer T through a loop 3 (capacitor C + transformer T + switch K). Since an output half-wave rectifier module is provided in a circuit of the secondary winding of the transformer T, electrical energy is not transferred to the secondary winding of the transformer T at this time. Equivalently, the primary winding of the transformer T and the capacitor C form an LC resonant loop to maintain energy in the loop. In addition, when the switch K is in the closed state, the input power supply charges the inductor L through the loop 2, and the inductor L undergoes next energy storage.

Preferably, controllers corresponding to phases A/B/C are connected to the information acquisition module, and are configured to generate first control information according to phase information of corresponding input power supply acquired by the information acquisition module, and to transmit the first control information to the control center. The control center adjusts the first control information according to overall output requirements of the power circuit imposed by a load, so as to generate second control information including duty cycles and frequencies of switches, and transmits the second control information to switches corresponding to the respective phases.

Specifically, in this embodiment, the three-phase power includes three phases: the phase A, the phase B, and the phase C. The power circuit is connected to each phase. The connected power circuit includes power circuit units, and each power circuit unit includes three circuit groups.

The power circuit further includes a controller corresponding to each phase. The controller is connected to the information acquisition module and the control center, and is configured to generate first control information based on input phase information of each phase of the input power supply that is acquired by the information acquisition module, and transmit the first control information to the control center. The information acquisition module herein may be a sensor, a monitor, etc. A specific implementation form and components are not limited, provided that voltage/current information of each phase of input of the power circuit and output voltage/current information of the entire power circuit can be obtained. The specific method for generating the first control information herein is not limited.

The control center receives the first control information that is sent by the controller and that carries the phase information of the corresponding phase, generates second control information based on the output voltage/current information of the current power circuit that is acquired by the information acquisition module and requirements of the load for the output voltage/current, etc. of the entire power circuit, and transmits the second control information to the switch of the power circuit group connected to the corresponding phase, to control the operating state of the switch. Specifically, the second control information generated by the control center is duty cycle and frequency information of the switches. A specific method for generating the second control information is not limited, provided that the technical method of the present application can be implemented.

Preferably, the inductors of the power circuit groups cooperate with the switches to participate in implementing power factor correction, and further implement dynamic boosting/bucking adjustment based on the input/output voltage, current information and the requirement for an output voltage of the connected load.

Specifically, still referring to FIG. 3, the inductors of the circuit groups participate in implementing power factor correction, and further implement dynamic boosting/bucking adjustment based on the input voltage and the requirement for the output voltage of the power circuit. A principle that the inductors in the circuit groups disclosed in this embodiment cooperate with the switches to implement power factor correction is as follows.

When the input power supply provides an AC power input, a voltage period T' of the input power supply after full-wave rectification is set to a first time interval (if the input power supply provides DC power, the voltage period T' of the input power supply is directly set to the first time interval without rectification), and the input voltage continuously changes in the first time interval T'.

Due to the characteristic of the inductor that the current cannot change abruptly, which is determined by a parameter characteristic of the inductor, a time period interval corresponding to a operating frequency of the switch K is a second time interval T".

When the second time interval T" is less than the voltage period T' of the input power supply by a plurality of orders of magnitude, the switch K has been opened and closed hundreds or thousands of times in a range of the voltage period T'. In other words, for a process of controlling the operation of the power circuit unit based on the operating state of the switch K, the voltage of the input power supply does not change significantly from a local perspective, and may basically be considered constant, that is, corresponding voltages of the input power supply before and after the switch K is switched once are considered constant. In addition, when the first time interval T' includes a large number of second time intervals T", that is, the input voltage changes significantly, the inductor L has undergone a plurality of charge and discharge processes through control of the switch K. In other words, in this case, the inductor L has completed a plurality of cycles of the loop 1 (the input power supply + the inductor L + the capacitor C + the transformer T), the loop 2 (the input power supply + the inductor L + the switch K), and the loop 3 (the capacitor C + the transformer T + the switch K) during the above operating process. The inductor L may obtain electric energy even through a relatively low voltage corresponding to the current input power supply, and smoothly transmit the current to the transformer T through the above loops, for further provision to the electric energy output end. Instead of utilizing only a peak portion of a sinusoidal voltage of the input power supply, this can effectively and smoothly transmit even the relatively low voltage of the input power supply, implementing power factor correction.

In this embodiment, the inductor can implement power factor correction in the power circuit. This means that the inductor can fully utilize a part of low-voltage electric energy input by the input power supply, ensuring that a power factor of the power circuit unit can exceed 99%.

Further, while implementing power factor correction, the inductor of the power circuit unit in the present application may further cooperate with the operating state of the switch K to perform dynamic boosting/bucking operations based on a specific input voltage and a specific output voltage required by the load of the power circuit. A specific boosting/bucking process and a principle are as follows.

When the voltage provided by the power circuit unit is inadequate, cannot meet the requirement of the load, and needs to be boosted, the controller controls the switch K by increasing a duty cycle of the switch K or reducing an operating frequency of the switch K, that is, increasing charge time of the inductor L, so that when the switch is open, the inductor L may have more electric energy transmitted to the capacitor and the primary winding of the transformer of the circuit assembly and further induced to the secondary winding of the transformer, to implement boosting. Further, if the voltage provided by the power circuit unit is relatively high, and needs to be bucked, the controller controls the switch K by reducing the duty cycle of the switch K or increasing the operating frequency of the switch, to reduce the charge time of the inductor L. In this way, electric energy transmitted by the inductor to the capacitor and the transformer in the circuit assembly is reduced, to implement bucking.

Herein, when the period interval T" corresponding to the operating frequency of the switch K is entirely greater than the voltage period T' of the input power supply, that is, T">>T', the frequency and the duty cycle of the switch K are adjusted to further adjust the charge and discharge time of the inductor, to implement boosting/bucking. Specifically, a length of the voltage period T" of the input power supply may be set based on a specific condition of the input power supply. Further, if the input power supply provides AC power whose voltage changes periodically, for example, sinusoidal AC power, a frequency of the input power supply is 100 Hz, and correspondingly, T'=10 ms. If the voltage of the input power supply changes with no obvious periodicity, a value of T' may be set by analogy with a change period of the sinusoidal AC power. Any specific setting manner may be used, provided that the requirements described above are met and the solution of the present application can be implemented.

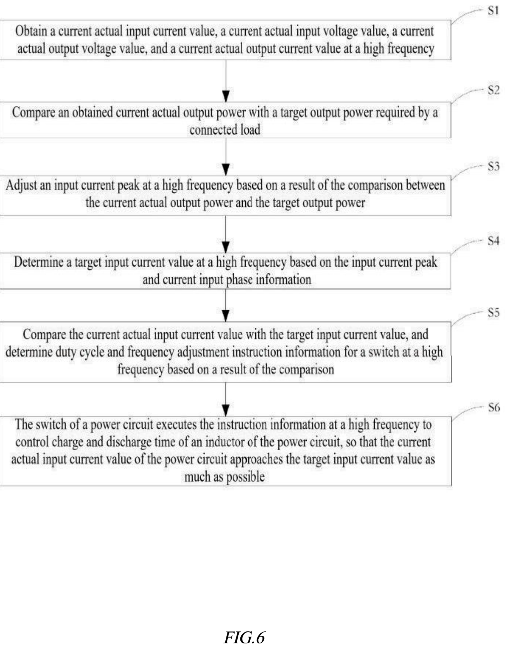

Specifically, referring to FIG. 6, the inductor cooperates with the operating state of the switch in the power circuit unit to implement power factor correction and boosting and/or busing required by the corresponding output. A specific operating process is as follows.

Step S1: Obtain a current actual input current value, a current actual input voltage value, a current actual output voltage value, and a current actual output current value at a high frequency.

Step S2: Compare an obtained current actual output power with a target output power required by a connected load.

Step S3: Adjust an input current peak (I_in_peak) at a high frequency based on a result of the comparison between the current actual output power and the target output power.

Step S4: Determine a target input current value ($I_{target\ input\ current\ value} = I_{input\ current\ peak} *$ phase information) at a high frequency based on the input current peak (I_in_peak) and current input phase information (current input voltage/input voltage peak).

Step S5: Compare the current actual input current value with the target input current value, and determine duty cycle and frequency adjustment instruction information for the switch at a high frequency based on a result of the comparison.

Step S6: The switch of the power circuit executes the instruction information at a high frequency to control the charge and discharge time of the inductor in the power circuit, so that the current actual input current value of the power circuit approaches the target input current value as much as possible.

Specifically, component parameters of the circuit group need to be determined, to ensure that the power circuit unit of the present application can implement functions of boosting, bucking, power factor correction in a case of an AC input, and the like and the electric energy conversion rate of the power circuit of the present application reaches 98% or even more. Under the same electric energy conversion rate, the power circuit of the present application has lower costs and higher circuit stability than those in the prior art.

Specifically, the power circuit unit of the present application can both implement output power and voltage boosting/bucking control based on the requirement of the load and implement power factor correction in a case of a periodic fluctuating input. Compared with a circuit implementing the same functions in the prior art, the power circuit unit of the present application includes less components in a simple connection relationship, and has low costs and high stability.

In this embodiment, the power circuit used three-phase power with parallel combination at the output ends. For each phase, the aforementioned steps are followed to implement the power factor correction of that phase while simultaneously achieving dynamic boosting/bucking adjustment at the combined parallel output ends. In the circuit group disclosed in the present application, during the turn-off period of a switch, energy stored in the inductor and the primary winding of the transformer is induced to the secondary winding of the transformer through current changes in the primary winding. That is, the amount of energy deliverable to the secondary winding of the transformer depends on the amounts of energy stored in the inductor and the primary winding of the transformer during the period when the switch is on. Under such conditions, when the three-phase power is in operation, the output ends are directly connected in parallel to avoid power imbalance among the three circuit groups corresponding to the three phases.

In order to ensure that the power circuit of the present application maintains advantages such as good stability and low cost while also achieving relatively high energy conversion rate, component parameters in the circuit groups of the power circuit need to be determined.

Principles for determining component parameters in the circuit group are as follows: Determination of specific component parameters is related to an input voltage, an output voltage, and an output power of the circuit group. First, a maximum input voltage, a maximum output voltage, and an output power of the circuit group are determined. In the case of alternating current, the maximum voltage refers to an effective value thereof, and in the case of direct current, the maximum voltage refers to a maximum value within an input/output voltage range.

Based on a ratio between the maximum input voltage and the maximum output voltage and the output power of the power circuit unit, parameters of components in the circuit group are determined, including capacitance parameters, inductance parameters, inductance values of primary and secondary windings of a transformer, a turns ratio between the primary and secondary windings, and an operating frequency range of switches.

Specifically, in practical implementations, when determining inductance parameters of an inductor and primary and secondary windings of a transformer in the circuit group, the following factors need to be considered:

When parameters such as the operating frequency and duty cycle of the switch, the primary winding inductance of a transformer, and the inductance value of the inductor remain unchanged, an increase in the input voltage allows the primary winding of the transformer to store more energy during the turn-on period of a switch. During a turn-off period of the switch, energy stored in the primary winding of the transformer is induced to the secondary winding of the transformer, thereby increasing an output power of the circuit group. Conversely, when the input voltage decreases, the output power of the circuit group can be reduced.

When parameters such as the maximum input voltage, the inductance value of the inductor, and the operating frequency and duty cycle of the switch remain unchanged, a decrease in the inductance value of a primary winding of the transformer allows the primary winding to store more energy during a turn-on period of the switch. During a turn-off period of the switch, energy stored in the primary winding is induced to the secondary winding of the transformer, thereby increasing an output power of the circuit group. Correspondingly, when the primary winding inductance of the transformer increases, the output power of the circuit group can be reduced.

In addition, during determination of the primary winding inductance of the transformer, it is also necessary to consider that excessive energy storage in the primary winding may cause magnetic saturation of the transformer, thereby reducing energy conversion rate.

In practice, changing the turn ratio between the primary and secondary windings of a transformer affects the conversion rate of the circuit. Specifically, when the input voltage, operating frequency and duty cycle of the switch, load resistance, primary winding inductance of the transformer, and the inductance of the inductor are fixed, increasing the number of turns in the secondary winding or decreasing the number of turns in the primary winding, that is, reducing the primary-to-secondary turns ratio, leads to an increase in the output voltage. Conversely, decreasing the number of turns in the secondary winding or increasing the number of turns in the primary winding, that is, increasing the primary-to-secondary turns ratio, results in a reduction in the output voltage. By determining the transformer parameters according to specific application scenarios and the aforementioned considerations, the conversion rate of the power circuit can be effectively improved.

In practice, when parameters such as the input voltage, the operating frequency and duty cycle of the switch, the primary winding inductance of the transformer are fixed, a decrease in the inductance of the inductor allows the inductor to store more energy during the turn-on period of a switch. During a turn-off period of the switch, energy stored in the inductor is induced to the secondary winding of the transformer, thereby increasing an output power of the circuit group. Conversely, when the inductance of the inductor increases, the output power of the circuit group can be reduced.

When determining the frequency range of the switch, the following factors need to be considered. Under conditions where other component parameters in the circuit group remain unchanged, reducing the frequency of the switch causes the energy storage time t during which the switch is closed within a single switching cycle to increase, and correspondingly the frequency f decreases. During the period when the switch is closed, the energy stored in the inductor and the primary winding of the transformer increases, thereby increasing the output power of the circuit group. Correspondingly, increasing the frequency of the switch reduces the output power of the circuit group. In addition, as the frequency of the switch increases, switching losses are generated during the turn-on and turn-off transitions of the switch, and increasing the frequency of the switch further increases such switching losses. Herein, the conversion rate of the transformer also needs to be considered. Different magnetic core materials exhibit different inductance values and conversion rates at different frequencies. For example, when the switching frequency is lower than 30 kHz, transformer saturation may occur, resulting in a reduction in conversion efficiency; an excessively high switching frequency, for example higher than 500 kHz, may cause the inductance of the transformer to change significantly, thereby reducing the conversion rate.

The process of determining the capacitance value of the capacitor is as follows. As described above, the capacitor stores energy during the turn-off state of the switch, and during the turn-on state of the switch, the capacitor resonates with the primary winding of the transformer to transfer the stored energy to the primary winding of the transformer. If the capacitance value is excessively small, the energy stored in the capacitor during operation is caused to be insufficient, thereby reducing the output power of the power circuit unit and consequently lowering the conversion rate. Conversely, if the capacitance value is excessively large, when the input voltage is an alternating current, the voltage across the capacitor cannot closely follow changes in the voltage of the input alternating current, resulting in difficulty in power factor correction and a reduction in energy conversion rate.

Preferably, when a ratio of an input voltage maximum $V_{input}$ to an output voltage maximum $V_{output}$ of the circuit group is $V_{input} : V_{output} = 0.2$ to 8, and an output power is greater than 200 W, parameters of the capacitors range from 30 nF to 3 $\mu$F, inductance of the primary windings of the transformers ranges from 10 $\mu$H to 1,000 $\mu$H, and ratios of the primary windings to the secondary windings of the transformers are $R_{primary} : R_{secondary} = 1:5$ to 5:1.

Specifically, the output power of the power circuit unit is greater than 200 W, and the ratio of the input voltage maximum and the output voltage maximum is 0.2 to 8.0, according to the above parameter selection rule, when the parameter of the capacitor is less than 30 nF, a voltage across the capacitor rises excessively fast during a turn-off period of the switch, causing an excessive fast rise in a voltage across the switch. This may damage the switch, or require use of a switch with a higher withstand voltage, increasing the costs of the switch. When the parameter of the capacitor is greater than 3 μF, when the switch is on, a current of the primary winding inductor of the transformer rises excessively fast, and at the moment when the switch is opened, a voltage spike brought by leakage inductance of the transformer is excessively high. This may damage the switch, or require use of a switch with a higher withstand voltage, increasing the costs of the switch.

When the inductance of the primary winding of the transformer is less than 10 μH, it is relatively difficult to balance the parameters of the transformer. For example, an excessively small number of turns may lead to saturation, failing to bear an adequate power. Alternatively, even with an adequate number of turns, an excessively large air gap in a magnetic core may cause severe magnetic leakage and reduced efficiency.

When the primary inductance of the transformer is greater than 1,000 μH, the energy stored in the primary inductor of the transformer during an energy storage period in which the switch is on decreases. The frequency needs to be reduced to bear an adequate power. An excessively low frequency may cause a low conversion efficiency of the transformer and susceptibility to saturation.

When the ratio of the primary winding to the secondary winding of the transformer is less than 1:5, it is difficult to manufacture the transformer, which is prone to causing excessive leakage inductance in the secondary winding of the transformer. When the switch is on, the leakage inductance of the secondary winding induces significant oscillation in the current of the switch, leading to a significant reduction in efficiency.

When the ratio of the primary winding to the secondary winding of the transformer is greater than 5:1, it is difficult to manufacture the transformer, which is prone to causing excessive leakage inductance in the primary winding of the transformer. At the moment the switch is opened, the leakage inductance of the primary winding induces significant voltage oscillation across the switch. This may damage the switch, or require selection of a switch with a higher withstand voltage, leading to an increase in the costs of the switch.

Specifically, in this embodiment, the parameter of the inductor in the circuit group is further determined according to the above parameter selection rule. Since the electric energy is dynamically distributed between the inductor and the primary winding of the transformer based on a magnitude relationship between inductance of the inductor and inductance of the primary winding of the transformer during the operation of the circuit group, the parameter of the inductor needs to have a relatively wide range, specifically 1 μH to 10 mH. When the inductor stores more energy and participates more in energy transfer, a parameter value of the inductor may be set relatively small, and a parameter range may be set to 1 μH to 100 μH. When the inductor does not participate in energy transfer or participates less in energy transfer, the parameter value of the inductor may be set relatively large, and the parameter range may be set to 2 mH to 10 mH.

Further, the following conditions further need to be considered when a specific value of the parameter of the inductor is determined.

If the inductance of the inductor is selected to be close to the inductance of the primary winding of the transformer, as an example rather than a limitation,

both the inductance of the inductor and the inductance of the primary winding of the transformer are designed to 10 μH to 30 μH. In this case, energy stored in the primary winding of the transformer and the inductor during the energy storage period in which the switch is on is consistent. This has the advantage that the inductor shares an energy transfer task, balancing heat generation points between the inductor and the primary winding of the transformer. In addition, a requirement is imposed on a material for a magnetic core of the inductor. The loss of a selected magnetic core during energy storage and transfer processes needs to be carefully tested to avoid inductor saturation, which may lead to an increase in inductor costs.

If the inductance of the inductor is much greater than the inductance of the primary winding of the transformer, as an example rather than a limitation, the inductance of the inductor is designed to 800 μH to 1,000 μH, and the inductance of the primary winding of the transformer is designed to 10 μH. In this case, the energy stored in the primary inductor of the transformer dominates during the energy storage period. This has advantages of reducing energy transfer of the inductor and reducing costs of the magnetic core of the inductor.

If the inductance of the inductor is set much less than the inductance of the primary winding of the transformer, as an example rather than a limitation, the inductance of the inductor is designed to 10 μH, and the inductance of the transformer is designed to 1,000 μH. In this case, the energy stored in the primary inductor of the transformer is far greater than that stored in the primary side of the transformer during the energy storage period. If both the inductance of the inductor and the inductance of the primary winding of the transformer are set relatively large, as an example rather than a limitation, the inductance of the inductor is designed to 100 μ to 1,000 μH, and the inductance of the transformer is designed to 100 μ to 1,000 μH. In this case, the operating frequency of the switch needs to be set to a very low range to output a power of more than 200 W. In addition, this is prone to causing saturation of the transformer and the inductor, imposing an extremely high requirement on setting of the parameters of the transformer and the inductor. In practice, the electric energy conversion efficiency of the power circuit in the solution is relatively low.

Specifically, in this embodiment, the operating frequency of the switch is related to a plurality of parameters. When parameters such as the inductance of the primary winding of the transformer, the inductance of the inductor, the duty cycle of the switch, the input voltage, and the load remain unchanged, reducing the operating frequency of the switch can improve the output power of the circuit group, and increasing the operating frequency of the switch can reduce the output frequency of the circuit group.

Further, during the process where the power circuit performs dynamic boosting/bucking adjustment based on the output requirement, values of the duty cycle and the frequency of the switch need to be calculated and adjusted in real time. The process where the circuit group implements power factor correction involves adjusting the duty cycle and the frequency of the switch to make an actual input current approach in real time a target input current that is synchronized with the input voltage and changes in accordance with the law for the input voltage. Therefore, the range of the operating frequency of the switch needs to be dynamically adjusted while meeting power factor correction. Specifically, the range is approximately 30 kHz to 500 kHz.

In summary, the output power of the circuit group is greater than 200 W, and the ratio of the input voltage maximum to the output voltage maximum is 0.2 to 8, the parameter of the capacitor is set to 30 nF to 3 $\mu$F, the primary inductance of the transformer is set to 10 $\mu$H to 1,000 $\mu$H, the parameter of the inductor is set to range from 1 $\mu$H to 10mH, and the ratio of the primary winding to the secondary winding of the transformer is set to 1:5 to 5:1. In this case, the circuit group can achieve an electric energy conversion rate of 96% or more, and the electric energy conversion rate is up to 98% in some specific scenarios. For details, refer to experimental data of Embodiments 1 to 64 in Table 1. Compared with the prior art, the circuit group has a higher electric energy conversion rate. In addition, the circuit group uses only a small number of components, achieving an ultra-high energy conversion rate at low costs, and can implement dynamic boosting and bucking based on the requirement of the load. Compared with a circuit with the same electric energy conversion rate in the prior art, the circuit group of the present application has higher stability, lower costs, and lower electric energy loss, and is more energy-saving.

Preferably, when a ratio of an input voltage maximum to an output voltage maximum of the circuit group is $V_{input}$ : $V_{output}$ = 0.2 to 1.0, and an output power is 200 W to 1,000 W, inductance of the primary windings of the transformers ranges from 10 $\mu$H to 1,000 $\mu$H, ratios of the primary windings to the secondary windings of the transformers are $R_{primary}$ : $R_{secondary}$ = 1:5 to 1:1, and parameters of the capacitors range from 100 nF to 3 $\mu$F.

Specifically, this embodiment provides parameter ranges of the corresponding capacitor, the primary winding of the transformer, and the ratio of the primary winding to the secondary winding of the transformer in the components of the circuit group when the output power of the circuit group is 200 W to 1,000 W and a ratio of a calculated input voltage to a calculated output voltage is 0.2 to 1.0.

According to the above parameter determining principle and process, after a specific input voltage maximum, a specific output voltage maximum, and a specific output power are determined, the specific parameters of the corresponding components are selected and determined within the parameter ranges of the corresponding components provided in this embodiment. This implements power factor correction and dynamic boosting/bucking adjustment based on the requirement of the output end, and can achieve an electric energy conversion rate of up to 98%. For details of specific experimental data of the parameters and test results, refer to Embodiments 1 to 18 in Table 1. Compared with a circuit with the same functions and the same electric energy conversion rate in the prior art, the power circuit of the present application uses significantly less components that those used by the circuit in the prior art, and has lower energy loss, lower costs, and higher circuit stability.

As an example rather than a limitation, in a case where the input voltage maximum of the circuit group is 50 V, the output voltage maximum is approximately 250 V, and the output power is 200 W, according to the above parameter design principle, the inductance parameter of the inductor is designed to approximately 10 $\mu$H to 1 mH, the inductance parameter of the primary winding of the transformer is set to approximately 10 $\mu$H to 1 mH, the parameter of the capacitor is set to approximately 500 nF to 3,000 nF, and the ratio of the primary winding to the secondary winding of the transformer is set to approximately 1:5 to 1:2. In this case, the corresponding electric energy conversion rate is 97% or more.

Specifically, in this embodiment, the inductance of the primary winding of the transformer is set to 10 $\mu$H, or the inductance of the inductor is designed to approximately 10 $\mu$H. This is because in a case of a 50 V input voltage, the energy stored in the inductor and the primary side of the transformer during each energy storage cycle is very low. Only by significantly reducing the inductance of the primary winding of the transformer or the inductance of the inductor, the primary winding of the transformer and the inductor can store adequate energy during the energy storage cycle, so that a plurality of circuit groups supplies an adequate power to the output end or the connected load.

However, if the inductance of the primary winding of the transformer or the inductance of the inductor is further reduced, an excitation current of the transformer may be significantly increased, leading to a significant decrease in conversion efficiency.

In this embodiment, the inductance ratio of the primary winding to the secondary winding of the transformer ranges approximately from 1:5 to 1:2. Since the input voltage maximum is only 50 V, if a 1:1 transformer is used, the duty cycle for operation of the switch needs to be increased to boost the output voltage. If a 300 V output voltage is required, the duty cycle needs to be increased to be greater than approximately 70%, to obtain an output voltage of approximately 300 V. In this case, the loss during the on state of the switch decreases excessively, resulting in low conversion efficiency of the circuit group. Using a boosting transformer whose inductance ratio of the primary winding to the secondary winding ranges from 1:5 to 1:2 can effectively reduce the duty cycle of the switch and improve the electric energy conversion efficiency.

Since the input voltage is relatively low, the capacitor requires a relatively large capacitance to ensure that adequate energy is stored in the primary winding of the transformer during the energy storage period. If the parameter of the capacitor is set below 500 nF, when the output voltage changes dynamically, inadequate energy is stored in the capacitor at a part of power points, leading to a decrease in efficiency. If the capacitor is set at 3000 nF or more, a large voltage spike is observed when the switch is open. In this case, a switch with a better withstand voltage performance is required, which increases the costs.

In a case where the input voltage maximum is 300 V, the output voltage maximum is approximately 300 V, and the output power is 1,000 W, according to the above parameter design principle, the inductance of the primary winding of the transformer is set to approximately 60 $\mu$H to 1 mH, the parameter of the capacitor is set to approximately 100 nF to 500 nF, and the ratio of the primary winding to the secondary winding of the transformer is set to approximately 1:1. In this case, the electric energy conversion rate of the corresponding circuit group is 98% or more.

Specifically, as an example rather than a limitation, this embodiment may be applied to the solar photovoltaic field, when n=1, the input is 300 V DC power, the output is AC power with a maximum value of approximately 300 V, the output power of the circuit group is 1,000 W, and the input voltage maximum and the output voltage maximum are approximately 1:1, so that the inductance of the inductor and the primary winding of the transformer should be selected to be relatively large. For example, the inductance of the primary winding of the transformer is set to 60 $\mu$H, and the inductance of the inductor is set to 1 mH.Since the ratio of the input voltage maximum to the output voltage maximum is 1, the primary-secondary inductance of the transformer adopted is approximately 1:1. When the primary-secondary ratio of the transformer is close, costs can be reduced in a transformer manufacturing process, and the leakage inductance is easy to control.

In the application scenario of this embodiment, if a capacitor whose capacitance is less than 100 nF is selected, the capacitor may be unable to provide adequate energy to the primary winding of the transformer during the energy storage period in which the switch is closed, leading to a decrease in the conversion efficiency of the power circuit. If a capacitor whose capacitance is greater than 500 nF is selected, it is likely to cause a large charging current when the primary winding inductor of the transformer is charged during the energy storage period in which the switch is closed. At the moment when the switch is opened, a voltage spike is generated due to the primary leakage inductance of the transformer. As a result, a switch with a higher withstand voltage needs to be selected, increasing the costs.

In this embodiment, as an example rather than a limitation, this embodiment may be applied to the solar photovoltaic field. When n=1, the input is 300 V DC power, the output is AC power whose peak is approximately 300 V, the output power of the circuit group is 1,000 W, and the input voltage maximum and the output voltage maximum are approximately 1:1, so that the inductance of the inductor and the primary winding of the transformer should be selected to be relatively large. Smaller inductance may cause a decrease in the electric energy conversion efficiency. In practice, the inductance of the primary winding of the transformer is set to 60 $\mu$H, and the inductance of the inductor is set to 1 mH, so that the electric energy conversion efficiency of the power circuit is up to 98% or more.

In addition, the energy during the energy storage period may be distributed between the transformer and the inductor. If the inductance of the inductor is increased, and the inductance of the transformer is reduced, a proportion of energy stored in the primary winding of the transformer during the energy storage period in which the switch is closed is higher, and a proportion of energy stored in the inductor is lower. If the inductance of the inductor is reduced, and the inductance of the transformer is increased, a proportion of energy stored in the primary winding of the transformer during the energy storage period in which the switch is closed is lower, and a proportion of energy stored in the inductor is higher.

In the application scenario of this embodiment, when n=1, the parameter of the capacitor is approximately 100 nF to 500 nF.In practice, when n=1, if the capacitance of the capacitor is less than 100 nF, energy stored in the capacitor during the energy storage period in which the switch is closed is excessively low, and the capacitor cannot provide adequate energy to the primary winding of the transformer, leading to a decrease in the electric energy conversion efficiency of the circuit group. If the capacitance of the capacitor is greater than 500 nF, the capacitor stores excessive energy during the energy storage period in which the switch is closed, and is likely to cause a large charging current when charging the primary winding inductor of the transformer. At the moment when the switch is opened, a voltage spike is generated due to the primary leakage inductance of the transformer. As a result, a switch with a higher withstand voltage needs to be selected, increasing the costs.

In this embodiment, since the ratio of the input voltage maximum to the output voltage maximum is 1, the primary-secondary inductance of the transformer adopted is approximately 1:1.When the primary-secondary ratio of the transformer is close, costs can be reduced in a transformer manufacturing process, and the leakage inductance is easy to control.

Preferably, when a ratio of an input voltage maximum to an output voltage maximum of the circuit group is $V_{input}$ : $V_{output}$ = 0.5 to 1.5, and an output power is 1,000 W to 2,000 W, primary winding inductance of the transformers ranges from 30 $\mu$H to 1,000 $\mu$H, parameters of the capacitors range from 50 nF to 3 $\mu$F, and ratios of the primary windings to the secondary windings of the transformers are $R_{primary}$ : $R_{secondary}$ = 1:2 to 2:1.

Specifically, this embodiment provides parameter ranges of the corresponding capacitor, the primary winding of the transformer, and the ratio of the primary winding to the secondary winding of the transformer in the components of the circuit group when the output power of the circuit group is 1,000 W to 2,000 W and a ratio of a calculated input voltage to a calculated output voltage is 0.5 to 1.5. According to the above parameter determining principle and process, after a specific input voltage maximum, a specific output voltage maximum, and a specific output power are determined, the specific parameters of the corresponding components are selected and determined within the parameter ranges of the corresponding components provided in this embodiment. This implements power factor correction and dynamic boosting/-bucking adjustment based on the requirement of the output end, and can achieve an electric energy conversion rate of 96% or more or even 98% or more. For details of specific experimental data of the parameters and test results, refer to Embodiments 32 to 48 in Table 1. Compared with a circuit with the same functions and the same electric energy conversion rate in the prior art, the circuit group of the present application uses significantly less components than those used by the circuit in the prior art, and has lower energy loss, lower costs, and higher circuit stability.

As an example rather than a limitation, in a case where the input voltage is a 220 sine wave, that is, the input voltage maximum is approximately 311 V, the output voltage maximum is approximately 200 V, and the output power is 2,000 W, according to the above parameter design principle, the inductance range of the primary winding of the transformer is set to approximately 30 $\mu$H to 1 mH, the parameter range of the capacitor is set to approximately 500 nF to 3000 nF, and the ratio of the primary winding to the secondary winding of the transformer is set to approximately 2:1. In this case, the electric energy conversion rate of the circuit group may be 97% or more. Compared with a circuit with the same electric energy conversion rate in the prior art, the circuit group of the present application uses fewer components, has lower energy loss and higher stability, and is more energy-saving.

As an example rather than a limitation, in a case where the input voltage is a 380 V sine wave, that is, the input voltage maximum is approximately 540 V, the output voltage maximum is approximately 1,000 V, the ratio of the input voltage maximum to the output voltage maximum is approximately 0.5, and the output power is 1,000 W, according to the above parameter design principle, the inductance of the primary winding of the transformer is set to approximately 150 $\mu$H to 1 mH, the parameter of the capacitor is set to approximately 50 nF to 500 nF, and the ratio of the primary winding to the secondary winding of the transformer is set to approximately 1:2. In this case, the corresponding electric energy conversion rate is 98% or more.

In this embodiment, if the output voltage is 1,000 V, the output voltage is excessively high. If a 1:1 transformer is used, the output voltage may be induced to the primary side of the transformer and superimposed with the voltage on the capacitor, resulting in an excessively high withstand voltage of the switch, which may damage the switch. If a 1:2 transformer is used, when the switch is open, after the 1,000 V output voltage is induced to the primary side, the primary voltage is only 500 V. After superimposition with the voltage on the capacitor, the withstand voltage of the switch during the turn-off period is significantly reduced, a switch selection range is extended, and the costs are significantly reduced. Therefore, the ratio of the primary winding to the secondary winding of the transformer needs to be set to 1:2. This configuration can significantly reduce the duty cycle for operation of the switch and improve the electric energy conversion rate of the circuit group. In addition, inducing the 1,000 V output voltage to the primary side via the transformer whose primary-secondary ratio is 1:2 can significantly reduce the withstand voltage of the switching transistor during the turn-off period, extend the switching transistor selection range, and significantly reduce the costs.

Preferably, when a ratio of an input voltage maximum to an output voltage maximum of the circuit group is $V_{input}$ : $V_{output}$ = 5.0 to 8.0, and an output power is 1,000 W to 2,000 W, primary winding inductance of the transformers ranges from 50 $\mu$H to 250 $\mu$H, ratios of the primary windings to the secondary windings of the n transformers are $R_{primary}$ : $R_{secondary}$ = 2:1 to 5:1, and parameters of the n capacitors of the n circuit assemblies range from 200 nF to 800 nF.

Specifically, this embodiment provides parameter ranges of the corresponding capacitor, the primary winding of the transformer, and the ratio of the primary winding to the secondary winding of the transformer in the components of the circuit group when the output power of the circuit group is 1,000 W to 2,000 W and a ratio of a calculated input voltage to a calculated output voltage is 5.0 to 8.0. According to the above parameter determining principle and process, after a specific input voltage maximum, a specific output voltage maximum, and a specific output power are determined, the specific parameters of the corresponding components are selected and determined within the parameter ranges of the corresponding components provided in this embodiment. This implements power factor correction and dynamic boosting/-bucking adjustment based on the requirement of the output end, and can achieve an electric energy conversion rate of 96% or more or even 98% or more. For details of specific experimental data of the parameters and test results, refer to Embodiments 19 to 31 in Table 1. Compared with a circuit with the same functions and the same electric energy conversion rate in the prior art, the circuit group of the present application uses significantly less components than those used by the circuit in the prior art, and has lower energy loss, lower costs, and higher circuit stability.

As an example rather than a limitation, in a case where the input voltage is a 220 V sine wave, that is, the input voltage maximum is approximately 311 V, the output voltage maximum is approximately 40 V, and the output power is 1,000 W, according to the above parameter design principle, the inductance of the primary winding of the transformer is set to approximately 150 $\mu$H to 250 $\mu$H, the parameter of the capacitor is set to approximately 200 nF to 500 nF, and the ratio of the primary winding to the secondary winding of the transformer is set to approximately 5:1. In this case, the corresponding electric energy conversion rate is 96% or more.

Specifically, in this embodiment, the output voltage is only 40 V, and the output half-wave rectifier module can use a switching device instead of a diode. In a case of a low voltage, the output current is relatively large, and a switching device with relatively low internal resistance needs to be selected.

As an example rather than a limitation, in a case where the input voltage is a 380 V sine wave, that is, the input voltage maximum is approximately 540 V, the output voltage maximum is approximately 100 V, the ratio of the input voltage maximum to the output voltage maximum is approximately 5:1, and the output power is 2,000 W, according to the above parameter design principle, the inductance of the primary winding of the transformer is set to approximately 50 $\mu$H to 150 $\mu$H, the parameter of the capacitor is set to approximately 400 nF to 800 nF, and the ratio of the primary winding to the secondary winding of the transformer is set to approximately 2:1. In this case, the corresponding electric energy conversion rate is 97% or more. In a case of the same function and the same electric energy conversion rate as that in the prior art, the number of components of the circuit group of the present application is far less than that of a product of a same type on the market, the costs are far lower than the costs of the product on the market, and the circuit stability is higher.

In this embodiment, the input voltage of the circuit group is relatively high, the output voltage is relatively low, and the output current is relatively large. In practice, when n=1, using a 1:1 transformer may result in an excessively small duty cycle and an excessively low frequency of the switch, leading to low conversion efficiency of the transformer and consequently a decrease in the overall electric energy conversion efficiency of the circuit group. Using a transformer whose primary-secondary ratio is approximately 2:1 to 3:1 can well solve this problem and improve the conversion efficiency of the circuit. It should be noted that the primary leakage inductance of the transformer whose primary-secondary ratio is 2:1 to 3:1 may increase. If the primary leakage inductance is excessively large, a voltage spike may be generated at the moment when the switch is opened. This may damage the switch, or require use of a switch with a higher withstand voltage, increasing the costs. It is recommended herein to use a copper foil as a primary/secondary winding and use a process of winding the primary winding and the secondary winding in parallel to manufacture the transformer, to reduce the primary and secondary leakage inductance of the transformer.

In this embodiment, the output voltage is only 100 V, and it is recommended to use the switching component instead of the diode for output half-wave rectification. In addition, consideration may be given to configuring the switch of the circuit group as a switch assembly formed by connecting a plurality of switching devices in parallel, to reduce the conduction loss.

Preferably, when a ratio of an input voltage maximum to an output voltage maximum of the circuit group is $V_{input}$ : $V_{output}$ = 2.0 to 5.0, and an output power is 2,000 W to 10,000 W, primary inductance of the transformers ranges from 50 $\mu$H to 250 $\mu$H, parameters of the capacitors of range from 200 nF to 800 nF, and ratios of the primary windings to the secondary windings of the transformers are $R_{primary}$ : $R_{secondary}$ = 1:1 to 2:1.

Specifically, this embodiment provides parameter ranges of the corresponding capacitor, the primary winding of the transformer, and the ratio of the primary winding to the secondary winding of the transformer in the components of the circuit group when the output power of the circuit group is 2,000 W to 10,000 W and a ratio of a calculated input voltage to a calculated output voltage is 2.0 to 5.0.

According to the above parameter determining principle and process, after a specific input voltage maximum, a specific output voltage maximum, and a specific output power are determined, the specific parameters of the corresponding components are selected and determined within the parameter ranges of the corresponding components provided in this embodiment. This implements power factor correction and dynamic boosting/bucking adjustment based on the requirement of the output end, and can achieve an electric energy conversion rate of 96% or more or even 98% or more. For details of specific experimental data of the parameters and test results, refer to Embodiments 32 to 48 in Table 1. Compared with a circuit with the same functions and the same electric energy conversion rate in the prior art, the circuit group of the present application uses significantly less components than those used by the circuit in the prior art, and has lower energy loss, lower costs, and higher circuit stability.

As an example rather than a limitation, in a case where the input voltage is 600 V to 1,000 V, the output voltage is 220 V to 380 V, and the output power is 2,000 W to 10,000 W, according to the above parameter design principle, the inductance of the primary winding of the transformer is set to approximately 50 $\mu$H to 250 $\mu$H, the parameter of the capacitor is set to approximately 100 nF to 800 nF, and the ratio of the primary winding to the secondary winding of the transformer is set to approximately 1:1 to 2:1. In this case, the corresponding electric energy conversion rate is 96% or more. If the inductance of the primary winding of the transformer is less than 50 $\mu$H, the frequency of the switching transistor is excessively high, switching transistors such as an IGBT cannot be used, and the costs are further increased. If the inductance is higher than 250 μH, the entire circuit may be unable to output an adequate power, or the switch needs to operate at an extremely low frequency, reducing the conversion efficiency of the transformer. In a case of the same power and the same efficiency as that in the prior art, the number of components of the circuit group of the present application is far less than that of a circuit in the prior art, and the costs are far lower than the costs of the product in the prior art.

Specifically, with reference to FIG. 4 in combination with FIGS. 5-1, 5-2, 5-3, and 5-4, when the output ends of the three circuit groups corresponding to the three-phase power in the power circuit unit are connected in parallel, the process by which the power circuit mitigates output ripple is as follows:

As shown in FIG. 4, three circuit groups are connected to the three-phase power. When the switch of each corresponding circuit group is in a closed state, the inductor of each circuit group is charged through the above-mentioned loop 2, and a resonant loop formed by loop 3 (capacitor C + transformer T + switch K) adjusts the magnetic field direction of the primary winding of the transformer. At this time, the circuit group does not transfer energy to the secondary winding of the transformer. When the switch is opened, energy is transferred to the secondary winding of the transformer through the above-mentioned loop 1 (input power supply + inductor L + capacitor C + transformer T), and the energy is then delivered via the output end of the circuit group to charge an output capacitor, which is further connected to a load to supply electrical energy to the load.

As described above, if only one circuit group has its output end connected to an output capacitor, and the output capacitor is further connected to a load to supply electrical energy thereto, when the voltage of the input pulsating waveform is zero or relatively low, the output capacitor is required to supply energy to the load using its stored energy. Otherwise, significant output ripple may occur. In such a case, an output capacitor with a relatively large capacitance is required to alleviate the ripple issue, thereby increasing cost.

The three phases of a three-phase power supply have a phase difference of 120°. When identical resistive loads are connected to each phase of the three-phase power, the output power thereof is constant. By simultaneously connecting three circuit groups to the three-phase power and connecting the output ends of the three circuit groups in parallel, to be specific, connecting the output ends of the three circuit groups simultaneously to a positive terminal of an output capacitor and connecting the other ends thereof simultaneously to a negative terminal of the output capacitor, when the input voltage of a first circuit group in the power circuit unit is relatively low, the other two circuit groups, due to the 120° phase difference, ensure that the overall input power of the three-phase power to the power circuit unit remains unchanged and does not enter a low input power state.

Accordingly, the total input power is not affected by fluctuations of the 50 Hz power frequency phase. Since the inductor has a power factor correction function and the power of the three-phase power is constant, the output power of the power circuit unit is therefore constant, and voltage ripple is substantially eliminated, thereby providing a stable voltage output to the load.

For example, the input is 380 V sinusoidal alternating current and the required output voltage is 1000 V with an output power of about 40 kW:

When the input is single-phase power, as shown in FIG. 5-1, the single-phase power is full-wave rectified to form a pulsating waveform with a frequency of 100 Hz. As shown in FIG. 5-2, when the capacitance of the output capacitor is 3 mF, the corresponding output voltage exhibits ripple with a frequency of 100 Hz and an amplitude of about 28 V. When the input is three-phase power, compared with single-phase power, three 380 V sinusoidal waveforms have a phase difference of 120°. As shown in FIGS. 5-3 and 5-4, after the output ends of the circuit groups connected to each phase of the three-phase power are connected in parallel, the corresponding output voltage exhibits ripple with a frequency of 300 Hz and an amplitude of about 6 V.

It can be seen that the ripple is significantly reduced, thereby mitigating problems such as battery overcharging and output overcurrent, as well as heating and reduced service life caused by frequent charging and discharging of the output capacitor. In addition, an output capacitor with a smaller capacitance value may be selected, thereby reducing costs.

Preferably, after the output ends of the three circuit groups within each power circuit unit in the plurality of power circuit units are connected in parallel, the outputs of the plurality of power circuit units are connected in a series or parallel combination.

Preferably, after the output ends of the three circuit groups corresponding to the three-phase power in each of the plurality of power circuit units are connected in parallel, the outputs of the power circuit units are connected in a series or parallel combination.

Specifically, as described above, after the three circuit groups of each power circuit unit are respectively connected to the three-phase power, the output ends of the circuit groups are connected in parallel to mitigate output ripple. When the power circuit includes a plurality of power circuit units, the output ends of the plurality of power circuit units may be connected in series and/or in parallel, thereby providing a wider output voltage and/or power range to satisfy different voltage requirements of various loads.

In practice, when the power circuit includes a plurality of power circuit units, and each power circuit unit includes three circuit groups connected to the three-phase power, the output ends of the three circuit groups within each power circuit unit are connected in series and/or in parallel, and the output ends of a plurality of power circuit units that provide electrical energy may connect the output ends of a plurality of power circuit units in series, in parallel, or in a series-parallel combination through various switching control devices/modules.

Herein, a specific control device/module for implementing the series/parallel combination of the output ends of the plurality of power circuit units is not limited. Any solution of a switching control device/module that can implement the series/parallel combination of the output ends of the plurality of circuit assemblies in the prior art or the future technology shall fall within the scope of protection of the present application, provided that the solution can be directly applied to the series/parallel combination of the output ends of the plurality of circuit assemblies in this embodiment or can be applied to the series/parallel combination of the output ends of the plurality of circuit assemblies in this embodiment after adaptive modifications made by a person skilled in the art on the solution without creative efforts, for example, a relay and an electromagnetic switch.

Preferably, the power supply circuit further includes an input rectifier module configured to provide a direct current input to the inductor in the circuit group, wherein multiple circuit groups connected to each phase among the plurality of power circuit units share one full-wave rectifier module.

Preferably, the output half-wave rectifier module implements half-wave rectification by a diode.

Specifically, the output half-wave rectifier module provided in this embodiment is connected to one end of the secondary winding of the transformer. A specific working principle of the half-wave rectifier module is as follows: After the switch of the circuit group is switched from a closed state to an open state, the inductor and the first winding of the transformer that are fully charged when the switch is closed charges the capacitor. The secondary winding of the transformer acquires electric energy from the current in the primary winding by induction. In this case, the current in the secondary winding of the transformer is output to the electrolytic capacitor or the load by the half-wave rectifier module for electric energy provision or energy storage.

When the switch of the circuit group is switched from the open state to the closed state, the capacitor in the circuit assembly forms a loop with the primary winding of the transformer and the switch. Since the capacitor does not allow an abrupt voltage change, the capacitor and the primary winding of the transformer form resonance at this point. In addition, a current direction in the primary winding of the transformer is opposite to the current direction during the turn-off period of the switch. Due to the provision of the output half-wave rectifier module at the secondary winding of the transformer, no loop can be formed, and no induced current is generated in the secondary winding when the primary winding of the transformer, the capacitor, and the closed switch form a resonant circuit.

It can be learned that a specific circuit or component for implementing output half-wave rectification is not limited, provided that the half-wave rectifier module can implement unidirectional conduction of the current in the secondary winding of the transformer. Any solution of a circuit that can implement half-wave rectification in the prior art or the future technology shall fall within the scope of protection of the present application, provided that the solution can be directly applied to unidirectional conduction of the current in the secondary winding of the transformer in this embodiment or can be applied to unidirectional conduction of the current in the secondary winding of the transformer in this embodiment after adaptive modifications made by a person skilled in the art on the solution without creative efforts, for example, a diode/MOS transistor with a unidirectional conduction function, and a switching transistor controlled to be conducted unidirectionally.

Further, the diode is used as the output half-wave rectifier module, and the diode is connected to the corresponding output end of the secondary winding of the corresponding transformer to implement unidirectional output of the secondary winding of the transformer. The diode has an attribute of unidirectional conduction, and implementing half-wave rectification by the diode ensures a simple control circuit and a stable performance.

Preferably, the output half-wave rectifier module implements half-wave rectification by a first switch and a first controller that controls the first switching. Preferably, the first controller controls an operating mode of the first switch based on the control switch of the controller of the power circuit.

Specifically, this embodiment describes implementation of half-wave rectification on the output of the secondary winding of the transformer by the switch. In this case, the switch transistor is controlled by a controller of the switch transistor.

Further, the operating state of the switch determines whether the secondary winding of the transformer can form a loop. To be specific, when the switch is open, no loop can be formed; and when the switch is closed, a loop can be formed. In addition, after the switch of the circuit group is closed, when the capacitor of the circuit assembly charges the primary winding of the transformer, and forms resonance with the primary winding of the transformer, the secondary winding of the transformer cannot form a loop. In other words, in this case, the switch transistor needs to be opened. The controller for the switch transistor needs to control the operating state of the switch transistor based on the operating state of the switch in the power circuit unit. Based on the above analysis, when the switch of the circuit group is in the closed state, the controller for the switch transistor needs to control the switch to be in the open state.

In this embodiment, the controller for the switch transistor and the corresponding switch transistor are provided to implement a half-wave rectification function for the output of the secondary winding of the transformer. Compared with the diode, the switch has lower energy loss and a higher electric energy conversion rate, for example, in scenarios where the output voltage is relatively low, such as lower than 160 V.

Preferably, the switch of the circuit group is implemented by a bidirectional switch or a controllable switching device.

In practice, type selection of a switch component is also related to setting of the operating frequency of the switch. For an ordinary silicon-based MOS transistor, a maximum recommended frequency is limited to 150 kHz.For a silicon carbide MOS transistor, a maximum recommended frequency is limited to 250 kHz.For an IGBT switching transistor, a maximum recommended frequency is limited to 40 kHz.For a gallium nitride MOS transistor, a maximum recommended frequency is limited to 500 kHz.The switch in this embodiment is a commercially available high-frequency switch with a withstand voltage of 150 V, for example, a high-frequency switch whose model is NCEP15T14, and a corresponding operating frequency of the switch ranges from 50 kHz to 200 kHz.

Specifically, the switch of the circuit group undertakes a circuit connection or disconnection function based on the control information from the controller. Herein, a specific manner in which the controller controls the switch is not limited, that is, a manner, means, etc. through which the controller provides a control signal to the switch is not limited, which may be wireless or wired. Any solution in which control signal transmission from the controller to the switch can be implemented in the prior art or the future technology shall fall within the scope of protection of the present application, provided that the solution can be directly applied to control signal transmission from the controller to the switch controlled by the controller in this embodiment or can be applied to this embodiment after adaptive modifications made by a person skilled in the art on the solution without creative efforts.

Further, a specific form of the switch, the controller, or the switch and the controller of the switch for implementing circuit connection and disconnection in the circuit group is also not limited. Any solution of a switch, a controller, or a switch and a controller of the switch that can implement circuit connection and disconnection in the prior art or the future technology shall fall within the scope of protection of the present application, provided that the solution can be directly applied to a function of circuit connection and disconnection in the circuit group in this embodiment or can be applied to this embodiment after adaptive modifications made by a person skilled in the art on the solution without creative efforts.

Preferably, a range of a leakage inductance value of the transformer of the power circuit is less than 1.5%.

Specifically, during the operation of the circuit group, when the switch is closed, the input power supply charges the inductor. At the moment when the switch is opened, the current in the whole circuit is relatively large. In this case, leakage inductance of the transformer may cause a large voltage peak across the switch, resulting in a probability of breakdown and damage of the switch. To ensure a high electric energy conversion rate and better stability of the power circuit, the range of the leakage inductance value of the transformer should be less than 1.5%.

Further, a specific structure of the transformer of the power circuit of the present application is not limited herein. Any solution of a transformer structure that can realize leakage inductance of less than 1.5% in the prior art or the future technology shall fall within the scope of protection of the present application, provided that the solution can be directly applied to a function of the transformer in the power circuit unit of this embodiment or can be applied to this embodiment after adaptive modifications made by a person skilled in the art on the solution without creative efforts.

Preferably, the transformer of the power circuit has a structure of a copper foil or a U-shaped metal sheet, and a parallel winding.

Specifically, this embodiment discloses the structure and the winding manner of the transformer of the power circuit. A magnetic core structure of the transformer is a thin metal sheet or a copper sheet. The winding manner for the primary side and the secondary side of the transformer is a parallel winding manner. In this way, the leakage inductance of the transformer can be reduced, and an operation requirement of the power circuit can be met.

Referring to FIG. 6, the present application further provides a method for implementing power factor correction and output requirement-based boosting/bucking based on the above power circuit. The method includes the following steps.

Step S1: Obtain a current actual input current value, a current actual input voltage value, a current actual output voltage value, and a current actual output current value at a high frequency.

Step S2: Compare an obtained current actual output power with a target output power required by a connected load.

Step S3: Adjust an input current peak (I_in_peak) at a high frequency based on a result of the comparison between the current actual output power and the target output power.

Step S4: Determine a target input current value $I_{target\ input\ current\ value} = L_{input\ current\ peak}$ * phase information) at a high frequency based on the input current peak (I_in_peak) and current input phase information (current input voltage/input voltage peak).

Step S5: Compare the current actual input current value with the target input current value, and determine duty cycle and frequency adjustment instruction information for the switch at a high frequency based on a result of the comparison.

Step S6: The switch of the power circuit executes the instruction information at a high frequency to control the charge and discharge time of the inductor in the power circuit, so that the current actual input current value of the power circuit approaches the target input current value as much as possible.

Specifically, in step S1, the current actual input current value, the current actual input voltage value, the current actual output voltage value, and the current actual output current value are obtained at the high frequency. A current actual input condition and an actual output condition of the power circuit need to be acquired at the high frequency. A specific obtaining or acquisition manner is not limited, and may be obtaining by an acquisition unit connected to the controller or obtaining in another manner. The obtained information is transmitted to the controller for determining duty cycle and frequency adjustment instruction information for the switch. For a value of the high frequency, refer to a frequency of the switch of the power circuit. For example, the high frequency may be equal to the frequency of the switch, or may be less than the frequency of the switch. The value of the high frequency herein may change based on an actual situation, and is not specifically limited.

In step S2, the obtained current actual output power is compared with the target output power required by the connected load. When a usage scenario of the connected load or the power circuit is determined, the corresponding required target output power and target output voltage/current are relatively fixed. The current actual output power is compared with the target output power. When the current actual output power is greater than the target output power, it indicates that the actual output power is higher than the target output power, and the actual output power needs to be decreased. When the actual output power is less than the target output power, it indicates that the actual output does not meet the requirement for the target output power, and the actual output power needs to be increased.

In step S3, the input current peak (I_in_peak) is determined at the high frequency based on the result of the comparison between the actual output power and the target output power. If the actual output power is less than the target output power, the input current peak is increased, to increase the current actual output voltage or current and further increase the actual output power to meet the requirement of the load.If the actual output power is greater than the target output power, the input current peak is decreased, to decrease the current actual output voltage or current and further decrease the output power to meet the requirement of the load. A gap between the actual output power and the target output power needs to be considered for a degree of increasing or decreasing the input current peak. For example, if the gap exceeds a preset value, the degree of increasing the input current peak is increased, to meet the requirement of the load fast. Determining of the input current peak is a high-frequency determining and high-frequency adjustment process. A method for determining the degree of the increase/decrease is not limited, provided that the requirement of the load for the target output is met.

In step S4: the target input current value ( $I_{target input current value} = I_{input current peak}$ * phase information) is determined at the high frequency based on the input current peak (I_in_peak) and the current input phase information (current input voltage/input voltage peak). The current input phase information is a ratio of the current actual input voltage provided by the current input power supply to the power circuit to a peak of the periodically fluctuating voltage provided by the input power supply to the power circuit. The target input current value is a product of the input current peak determined in step S3 and the phase information, that is:

$$I_{input\ target\ current\ value} = I\_in\_peak * V_{current\ actual\ input\ voltage} / V_{input\ voltage\ peak}$$

In step S5, the current actual input current value is compared with the target input current value, and the duty cycle and frequency adjustment instruction information for the switch is determined at the high frequency. Specifically, when the current actual input current value is less than the target input current value, instruction information of controlling the switch to reduce the frequency and increase the duty cycle of the switch is generated by the control center, to control the operating state of the switch and further control the charge time of the inductor, thereby increasing the input current and meeting a power factor correction requirement. In addition, the current actual input current approaches the target input current value, to implement output control.

Otherwise, when the current actual input current value is greater than the target input current value, instruction information of controlling the switch to increase the frequency and reduce the duty cycle of the switch is generated in the control center, to control the operating state of the switch and further control the charge time of the inductor, thereby decreasing the input current and meeting a power factor correction requirement. In addition, the current actual input current approaches the target input current value, to implement output control.

Specifically, a degree of controlling the switch to reduce or increase the duty cycle of the switch and increase or reduce the frequency of the switch needs to be determined based on the gap between the current actual input current value and the target input current value. A specific implementation manner and process are not limited, and a person of ordinary skill in the art may try for setting based on an actual scenario.

In addition, the target input current value herein includes the phase information of the current input voltage, that is, the phase information of the current input power supply is considered when the current actual input current value is adjusted based on the target input current value, so that it is ensured that the current actual input current value keeps approaching the target input current value and fluctuates around the target input current value. Therefore, the power circuit has a power factor correction (PFC) capability.

In step S6, the switch of the power circuit executes the instruction information at the high frequency to control the charge and discharge time of the inductor in the power circuit, so that the current actual input current value of the power circuit approaches the target input current value as much as possible. Specifically, the switch of the power circuit executes, at the high frequency, a current duty cycle or frequency adjustment instruction sent by the control center, to control the charge and discharge time and frequency of the inductor of the power circuit, so that the current actual input current value of the power circuit approaches the target input current value as much as possible. In this way, the output power is controlled while power factor correction is implemented, that is, dynamic boosting/bucking adjustment is implemented based on the output requirement.

Specifically, the power circuit of the present application can both implement power factor correction and output voltage boosting/bucking control. Compared with a circuit implementing the same functions in the prior art, the power circuit unit of the present application includes less components in a simple connection relationship, and has high stability, lowers costs and saves energy.

The technical features in the above embodiments may be combined in any manner. For the purpose of simplicity in description, not all possible combinations of the technical features in the above embodiments are described. However, as long as the combinations of these technical features do not conflict with each other, the combinations shall all fall within the scope of the description.

The above embodiments merely represent several implementations of the present application, giving specifics and details thereof, but should not be understood as limiting the scope of the present patent of invention thereby. It should be noted that a person of ordinary skill in the art could also make several alterations and improvements without departing from the spirit of the present application and these would all fall within the scope of protection of the present application. Therefore, the scope of protection of the present patent application shall be in accordance with the appended claims.

Table 1

| Embodiments | Inductance of the inductor / μH | Primary side of the transformer / μH | Primary-secondary ratio of the transformer | Capacitance of the capacitor / nF | Frequency of the switch / K | Duty cycle % of the switch | Input type | Input voltage/ V | Input current / A | Input power / W | Input voltage maximum | Output type | Load | Output voltage / V | Output current / A | Output voltage maximum | Efficiency |
|---|---|---|---|---|---|---|---|---|---|---|---|---|---|---|---|---|---|
| 1 | 502.3 | 150.2 | 1:1 | 110 | 60 to 170 | 20 to 70 | DC | 305.20 | 1.66 | 505.11 | 305.20 | DC | 184.10 | 302.36 | 1.64 | 302.36 | 98.30% |
| 2 | 907.6 | 16.2 | 1:4 | 1500 | 80 to 120 | 50 to 60 | DC | 50.30 | 4.24 | 213.37 | 50.30 | DC | 304.67 | 251.50 | 0.83 | 251.50 | 97.30% |
| 3 | 600.3 | 150.2 | 1:1 | 100 | 120 to 170 | 45 to 55 | AC | 379.98 | 2.29 | 871.09 | 537.30 | DC | 338.86 | 537.29 | 1.59 | 537.29 | 97.80% |
| 4 | 907.7 | 10.3 | 1:5 | 3000 | 60 to 100 | 45 to 55 | DC | 40.70 | 5.47 | 222.49 | 45.70 | DC | 244.86 | 230.0 | 0.94 | 230.00 | 97.10% |
| 5 | 998.7 | 30.5 | 1:2 | 770 | 60 to 170 | 20 to 70 | DC | 50.20 | 3.12 | 156.67 | 50.20 | DC | 150.70 | 149.95 | 1.02 | 149.95 | 97.80% |
| 6 | 900.2 | 15.1 | 1:4 | 800 | 80 to 120 | 50 to 60 | DC | 50.00 | 5.39 | 269.67 | 50.00 | DC | 238.20 | 250.00 | 1.05 | 250.00 | 97.30% |
| 7 | 899.6 | 10.0 | 1:4 | 3000 | 120 to 170 | 50 to 60 | DC | 60.30 | 6.50 | 392.11 | 60.30 | DC | 105.06 | 200.00 | 1.90 | 200.00 | 97.10% |
| 8 | 300.0 | 1,000.0 | 1:1 | 200 | 80 to 120 | 45 to 55 | DC | 200.00 | 1.18 | 236.12 | 200.00 | DC | 192.13 | 210.10 | 1.09 | 210.10 | 97.30% |
| 9 | 907.6 | 20.1 | 1:3 | 1,000 | 80 to 120 | 45 to 55 | DC | 60.15 | 3.68 | 221.65 | 60.20 | DC | 186.02 | 200.50 | 1.08 | 200.50 | 97.50% |
| 10 | 907.6 | 150.3 | 1:1 | 200 | 120 to 170 | 45 to 55 | DC | 362.88 | 2.26 | 820.16 | 362.90 | DC | 202.88 | 403.20 | 2.00 | 403.20 | 98.20% |
| 11 | 603.4 | 15.0 | 1:4 | 2900 | 60 to 100 | 45 to 55 | DC | 49.30 | 5.23 | 257.92 | 49.30 | DC | 155.76 | 197.20 | 1.27 | 197.20 | 96.80% |
| 12 | 240.8 | 950.0 | 1:1 | 300 | 80 to 120 | 55 to 65 | AC | 220.60 | 1.71 | 377.87 | 311.90 | DC | 300.30 | 440.90 | 0.83 | 440.90 | 96.50% |
| 13 | 998.7 | 30.4 | 1:2 | 220 | 60 to 120 | 55 to 65 | DC | 50.40 | 4.56 | 229.72 | 50.40 | DC | 108.45 | 155.23 | 1.43 | 155.23 | 96.72% |
| 14 | 998.7 | 30.4 | 1:3 | 220 | 60 to 120 | 45 to 55 | DC | 50.40 | 4.34 | 218.65 | 50.40 | DC | 110.24 | 152.83 | 1.39 | 152.83 | 96.90% |

(continued)

| Embodiments | Inductance of the inductor / µH | Primary side of the transformer / µH | Primary-secondary ratio of the transformer | Capacitance of the capacitor / nF | Frequency of the switch / K | Duty cycle % of the switch | Input type | Input voltage/ V | Input current / A | Input power / W | Input voltage maximum | Output type | Load | Output voltage / V | Output current / A | Output voltage maximum | Efficiency |
|---|---|---|---|---|---|---|---|---|---|---|---|---|---|---|---|---|---|
| 15 | 999.7 | 15.0 | 1:2 | 221 | 60 to 120 | 30 to 40 | DC | 50.17 | 9.16 | 459.69 | 50.17 | DC | 53.29 | 153.83 | 2.89 | 153.83 | 96.60% |
| 16 | 901.3 | 15.0 | 1:2 | 1500 | 80 to 120 | 30 to 40 | DC | 51.20 | 5.15 | 263.83 | 51.20 | DC | 53.80 | 117.76 | 2.19 | 117.76 | 97.70% |
| 17 | 300.0 | 950.0 | 1:1 | 50 | 80 to 120 | 45 to 55 | AC | 200.60 | 1.18 | 235.83 | 283.60 | DC | 375.07 | 292.16 | 0.78 | 292.16 | 96.50% |
| 18 | 907.1 | 200.9 | 1:1 | 105 | 80 to 120 | 35 to 45 | DC | 300.10 | 1.99 | 596.42 | 300.10 | DC | 154.96 | 300.65 | 1.94 | 300.65 | 97.80% |
| 19 | 310.3 | 50.3 | 2:1 | 800 | 60 to 100 | 25 to 35 | AC | 379.98 | 3.90 | 1480.30 | 537.30 | DC | 7.95 | 107.46 | 13.51 | 107.46 | 98.10% |
| 20 | 400.2 | 204.1 | 5:1 | 200 | 80 to 120 | 35 to 45 | DC | 600.30 | 2.86 | 1715.15 | 600.30 | DC | 3.36 | 75.04 | 22.35 | 75.04 | 97.80% |
| 21 | 350.2 | 250.7 | 3:1 | 500 | 80 to 120 | 35 to 45 | DC | 600.30 | 2.51 | 1508.38 | 600.30 | DC | 9.73 | 120.06 | 12.34 | 120.06 | 98.20% |
| 22 | 1985.8 | 90.8 | 4:1 | 220 | 60 to 170 | 20 to 70 | AC | 220.17 | 4.87 | 1072.23 | 311.10 | DC | 20.00 | 43.12 | 24.10 | 43.12 | 96.92% |
| 23 | 900.3 | 150.3 | 1:5 | 200 | 80 to 120 | 45 to 55 | DC | 379.91 | 3.83 | 1454.06 | 537.20 | DC | 8.23 | 107.44 | 13.05 | 107.44 | 96.40% |
| 24 | 310.3 | 55.2 | 2:1 | 790 | 60 to 100 | 25 to 35 | AC | 379.98 | 3.40 | 1292.33 | 537.29 | DC | 8.46 | 103.33 | 12.22 | 103.33 | 97.70% |
| 25 | 310.3 | 100.8 | 2:1 | 210 | 80 to 120 | 20 to 30 | DC | 670.30 | 1.66 | 1114.65 | 670.30 | DC | 7.20 | 88.20 | 12.25 | 88.20 | 96.90% |
| 26 | 250.3 | 240.2 | 2:1 | 210 | 60 to 80 | 20 to 30 | DC | 670.30 | 1.86 | 1245.41 | 670.30 | DC | 1036 | 111.72 | 10.78 | 111.72 | 96.70% |
| 27 | 230.8 | 55.2 | 3:1 | 220 | 60 to 120 | 30 to 40 | DC | 211.15 | 5.73 | 1209.97 | 211.15 | DC | 1.50 | 41.83 | 27.94 | 41.83 | 96.58% |
| 28 | 633.3 | 55.2 | 4:1 | 440 | 60 to 120 | 30 to 40 | AC | 220.25 | 6.10 | 1344.50 | 311.43 | DC | 2.11 | 52.38 | 24.85 | 52.38 | 96.81% |

(continued)

| Embodiments | Inductance of the inductor / µH | Primary side of the transformer / µH | Primary-secondary ratio of the transformer | Capacitance of the capacitor / nF | Frequency of the switch / K | Duty cycle % of the switch | Input type | Input voltage / V | Input current / A | Input power / W | Input voltage maximum | Output type | Load | Output voltage / V | Output current / A | Output voltage maximum | Efficiency |
|---|---|---|---|---|---|---|---|---|---|---|---|---|---|---|---|---|---|
| 29 | 300.2 | 65.5 | 2:1 | 660 | 60 to 120 | 20 to 30 | AC | 380.11 | 3.05 | 1159.17 | 537.48 | DC | 9.12 | 100.77 | 11.05 | 100.77 | 96.03% |
| 30 | 933.3 | 150.3 | 4:1 | 790 | 60 to 120 | 30 to 40 | AC | 379.86 | 3.05 | 1158.57 | 537.12 | DC | 4.50 | 70.94 | 15.76 | 70.94 | 96.48% |
| 31 | 301.7 | 80.7 | 4:1 | 790 | 60 to 120 | 30 to 40 | AC | 379.86 | 4.86 | 1847.70 | 537.12 | DC | 3.04 | 73.43 | 24.18 | 73.43 | 96.09% |
| 32 | 503.1 | 80.8 | 2:1 | 440 | 60 to 100 | 45 to 55 | DC | 250.80 | 4.90 | 1227.88 | 250.80 | DC | 209.30 | 501.60 | 2.40 | 501.60 | 97.90% |
| 33 | 903.6 | 250.3 | 1:2 | 50 | 120 to 170 | 50 to 60 | DC | 538.90 | 2.60 | 1402.68 | 538.90 | DC | 94.57 | 359.27 | 3.80 | 359.27 | 97.30% |
| 34 | 300.4 | 30.0 | 1:2 | 3000 | 80 to 120 | 45 to 55 | DC | 200.70 | 8.00 | 1605.58 | 200.70 | DC | 103.03 | 401.40 | 3.90 | 401.40 | 97.40% |
| 35 | 230.7 | 999.5 | 1:1 | 80 | 60 to 100 | 50 to 60 | AC | 380.10 | 3.28 | 1246.66 | 537.50 | DC | 345.05 | 644.95 | 1.87 | 644.95 | 96.70% |
| 36 | 799.6 | 150.2 | 1:1 | 220 | 60 to 170 | 20 to 70 | AC | 380.10 | 2.74 | 1040.71 | 537.40 | DC | 233.90 | 488.24 | 2.09 | 488.24 | 97.93% |
| 37 | 1502.1 | 150.2 | 1:1 | 220 | 60 to 170 | 20 to 70 | AC | 379.30 | 2.93 | 1110.21 | 537.40 | DC | 178.50 | 440.94 | 2.47 | 440.94 | 98.13% |
| 38 | 150.2 | 298.5 | 1:1 | 220 | 60 to 170 | 20 to 70 | AC | 381.30 | 2.71 | 1033.70 | 537.40 | DC | 158.40 | 398.75 | 2.52 | 398.75 | 97.09% |
| 39 | 788.6 | 148.9 | 1:1 | 2900 | 60 to 100 | 50 to 60 | DC | 300.40 | 4.51 | 1355.22 | 300.40 | DC | 138.67 | 429.14 | 3.09 | 429.14 | 98.00% |
| 40 | 788.6 | 166.3 | 1:2 | 55 | 120 to 170 | 35 to 45 | DC | 599.50 | 2.15 | 1286.39 | 599.50 | DC | 558.77 | 839.30 | 1.50 | 839.30 | 98.00% |
| 41 | 933.9 | 35.0 | 1:2 | 200 | 120 to 170 | 35 to 45 | DC | 343.80 | 5.50 | 1889.52 | 343.80 | DC | 131.75 | 491.14 | 3.73 | 491.14 | 96.90% |
| 42 | 230.7 | 950.1 | 1:1 | 1500 | 60 to 100 K | 50 to 60 | AC | 380.10 | 3.05 | 1160.89 | 537.46 | DC | 311.36 | 591.21 | 1.90 | 591.21 | 96.70% |

| Embodiments | Inductance of the inductor / μH | Primary side of the transformer / μH | Primary-secondary ratio of the transformer | Capacitance of the capacitor / nF | Frequency of the switch / K | Duty cycle % of the switch | Input type | Input voltage/ V | Input current / A | Input power / W | Input voltage maximum | Output type | Load | Output voltage / V | Output current / A | Output voltage maximum | Efficiency |
|---|---|---|---|---|---|---|---|---|---|---|---|---|---|---|---|---|---|
| 43 | 901.5 | 110.3 | 1:1 | 105 | 80 to 120 | 45 to 55 | DC | 300.10 | 4.00 | 1200.95 | 300.10 | DC | 78.22 | 303.10 | 3.88 | 303.10 | 97.80% |
| 44 | 300.9 | 150.2 | 1:1 | 220 | 60 to 120 | 40 to 50 | AC | 380.20 | 3.19 | 1213.54 | 537.60 | DC | 142.41 | 410.30 | 2.88 | 410.32 | 97.41% |
| 45 | 300.9 | 110.5 | 1:1 | 220 | 60 to 120 | 40 to 50 | AC | 379.70 | 4.32 | 1639.50 | 536.90 | DC | 104.71 | 408.30 | 3.90 | 408.30 | 97.11% |
| 46 | 300.9 | 95.1 | 1:1 | 220 | 60 to 120 | 40 to 50 | AC | 381.30 | 5.11 | 1948.25 | 539.16 | DC | 91.44 | 415.30 | 4.54 | 415.39 | 96.81% |
| 47 | 601.2 | 60.5 | 1:1 | 440 | 100 to 170 | 35 to 45 | AC | 379.70 | 3.89 | 1477.57 | 536.90 | DC | 91.03 | 361.40 | 3.97 | 361.46 | 97.11% |
| 48 | 900.9 | 100.7 | 1:1 | 600 | 100 to 170 | 50 to 60 | AC | 381.30 | 5.05 | 1924.21 | 539.16 | DC | 315.84 | 765.30 | 2.42 | 765.38 | 96.37% |
| 49 | 253.9 | 50.1 | 2:1 | 800 | 50 to 90 | 25 to 35 | AC | 380.10 | 5.37 | 2042.96 | 537.50 | DC | 5.77 | 107.49 | 18.63 | 107.49 | 98.00% |
| 50 | 253.9 | 249.1 | 2:1 | 200 | 60 to 100 | 45 to 55 | DC | 498.50 | 5.39 | 2685.91 | 498.50 | DC | 23.82 | 249.25 | 10.46 | 249.25 | 97.10% |
| 51 | 481.2 | 200.3 | 2:1 | 800 | 60 to 120 | 25 to 35 | DC | 1013.55 | 5.08 | 5147.81 | 1013.60 | DC | 12.56 | 249.12 | 19.84 | 249.12 | 96.01% |
| 52 | 1581.7 | 200.3 | 1:1 | 800 | 60 to 120 | 25 to 35 | DC | 903.95 | 2.92 | 2643.29 | 904.00 | DC | 78.91 | 449.12 | 5.69 | 449.12 | 96.71% |
| 53 | 1502.1 | 66.3 | 2:1 | 510 | 60 to 170 | 20 to 70 | AC | 220.52 | 9.51 | 2097.15 | 311.10 | DC | 178.50 | 200.77 | 10.06 | 200.77 | 96.33% |
| 54 | 1432.6 | 11.2 | 1:1 | 220 | 60 to 170 | 20 to 70 | DC | 599.80 | 17.64 | 10580.47 | 599.80 | DC | 1.80 | 537.91 | 18.89 | 537.91 | 96.02% |
| 55 | 913.6 | 160.1 | 1:1 | 400 | 120 to 170 | 25 to 35 | DC | 943.95 | 2.41 | 2272.55 | 943.95 | DC | 78.35 | 414.76 | 5.29 | 414.76 | 96.61% |
| 56 | 253.9 | 55.1 | 2:1 | 790 | 60 to 100 | 25 to 35 | DC | 466.80 | 4.85 | 2263.27 | 466.80 | DC | 4.26 | 97.25 | 22.81 | 97.25 | 98.00% |

(continued)

| Embodiments | Inductance of the inductor / µH | Primary side of the transformer / µH | Primary-secondary ratio of the transformer | Capacitance of the capacitor / nF | Frequency of the switch / K | Duty cycle % of the switch | Input type | Input voltage/ V | Input current / A | Input power / W | Input voltage maximum | Output type | Load | Output voltage / V | Output current / A | Output voltage maximum | Efficiency |
|---|---|---|---|---|---|---|---|---|---|---|---|---|---|---|---|---|---|
| 57 | 253.9 | 240.0 | 2:1 | 500 | 60 to 100 | 45 to 55 | DC | 603.80 | 5.68 | 3426.88 | 603.80 | DC | 12.14 | 201.27 | 16.58 | 201.27 | 97.40% |
| 58 | 1433.6 | 160.3 | 2:1 | 600 | 120 to 170 | 40 to 50 | DC | 998.29 | 4.83 | 4825.23 | 998.29 | DC | 35.36 | 404.91 | 11.45 | 404.91 | 96.10% |
| 59 | 913.6 | 149.1 | 2:1 | 600 | 100 to 150 | 35 to 45 | DC | 973.38 | 5.03 | 4895.11 | 973.38 | DC | 20.57 | 311.40 | 15.14 | 311.40 | 96.31% |
| 60 | 901.3 | 15.3 | 5:1 | 1500 | 80 to 120 | 45 to 55 | DC | 51.20 | 4.42 | 226.09 | 51.20 | DC | 298.83 | 256.00 | 0.86 | 256.00 | 97.00% |
| 61 | 900.3 | 250.7 | 4:1 | 50 | 120 to 170 | 30 to 40 | AC | 379.98 | 0.74 | 283.08 | 537.30 | DC | 16.44 | 67.16 | 4.08 | 67.16 | 96.90% |
| 62 | 900.3 | 300.6 | 4:1 | 30 | 120 to 170 | 30 to 40 | AC | 381.18 | 0.65 | 247.88 | 539.00 | DC | 18.67 | 67.37 | 3.61 | 67.37 | 98.10% |
| 63 | 1985.8 | 35.1 | 3:1 | 220 | 60 to 120 | 25 to 35 | AC | 220.15 | 5.80 | 1277.93 | 311.29 | DC | 1.42 | 41.83 | 29.51 | 41.83 | 96.58% |
| 64 | 933.3 | 30.5 | 3:1 | 660 | 60 to 120 | 25 to 35 | AC | 219.75 | 5.27 | 1158.12 | 310.73 | DC | 1.53 | 41.39 | 27.08 | 41.39 | 96.78% |

**Claims**

1.  A power circuit based on three-phase power, wherein the power circuit comprises an information acquisition module and a power circuit unit. The power circuit unit comprises three circuit groups connected to the three phases (A, B, C) of the three-phase power, and a control center for managing the operating state of these circuit groups;

    Each circuit group comprises an input rectifier module, an inductor, a capacitor, a switch with its controller, a transformer, and an output half-wave rectifier module. One end of the inductor is configured to connect to the live terminal of one phase of the three-phase power, and the other end of the inductor is connected to one end of the switch and one end of the capacitor. The other end of the capacitor is connected to one end of the primary winding of the transformer. The other end of the primary winding of the transformer and the other end of the switch are connected to the live terminal or the neutral terminal of another phase. The two output ends of the secondary winding of the transformer serve as the output ends providing electrical energy for the circuit group, wherein the end corresponding to the end of the primary winding connected to the capacitor is connected to the output half-wave rectifier module.
    The output ends of the three circuit groups included in the power circuit unit, which correspond to the three-phase power, are connected in parallel.

2.  The power circuit based on three-phase power according to claim 1, wherein the control center controls the duty cycle and frequency of the switch operation in the circuit group by transmitting control information to the switch;

    when the switch in the corresponding circuit group is in a closed state, it forms a loop with the input power supply and the inductor of the connected phase, thereby charging the inductor; and the capacitor, together with the switch and the inductor of the primary winding transformer, forms an LC resonant circuit, so the energy stored in the capacitor is transferred between the primary winding of the transformer and the capacitor.
    when the switch is in an open state, it forms an LLC resonant circuit with the input power supply, the inductor, the capacitor and the primary winding of the transformer of the connected phase. The input power supply of the connected phase and the charged inductor recharge the capacitor, while the charged inductor simultaneously superimposes its own energy on the energy stored in the primary winding of the transformer. Through the change in current in the primary winding of the transformer, electrical energy is induced into the secondary winding.

3.  The power circuit based on three-phase power according to claim 1, wherein the controllers for phases A, B, and C are connected to the information acquisition module. They are configured to generate first control information based on the phase information of the corresponding input power supply collected by the information acquisition module, and to provide this first control information to the control center. The control center adjusts the first control information according to the overall requirements of the load on the power supply circuit's output, thereby generating second control information that includes the switch duty cycle and frequency. This second control information is then provided to the switch of the corresponding phase.

4.  The power circuit based on three-phase power according to claim 1, wherein the inductors of the circuit groups collaborate with the switches to participate in implementing power factor correction, and further implement dynamic boosting/bucking adjustment based on the input/output voltage, current information, and the output voltage requirements of the connected load.

5.  The power circuit based on three-phase power according to claim 1, wherein a ratio of an input voltage maximum $V_{input}$ to an output voltage maximum $V_{output}$ of the circuit groups is $V_{input} : V_{output} = 0.2$ to 8, and when an output power is greater than 200 W, parameters of the capacitors range from 30 nF to 3 $\mu$F, inductance of the primary windings of the transformers ranges from 10 $\mu$H to 1,000 $\mu$H, and ratios of the primary windings to the secondary windings of the transformers are $R_{primary} : R_{secondary} = 1:5$ to 5: 1.

6.  The power circuit based on three-phase power according to claim 1, wherein the parallel connection of the output ends of the three circuit groups connected to the three-phase power included in the power circuit unit comprises: either connecting the output ends of the three circuit groups in parallel before connecting them to an output capacitor, or first connecting the output ends of the three circuit groups to their respective output capacitors and then paralleling these output capacitors.

7.  The power circuit based on three-phase power according to any one of claims 1 to 6, wherein the output half-wave rectifier module implements half-wave rectification by a diode.

8. The power circuit based on three-phase power according to any one of claims 1 to 6, wherein the output half-wave rectifier module implements half-wave rectification by a first switch and a first controller that controls the first switch.

9. The power circuit based on three-phase power according to claim 8, wherein the first controller controls the operating mode of the first switch according to the inducing mode of electrical energy in the secondary winding of the transformer controlled by the control center of the circuit groups.

10. The power circuit based on three-phase power according to any one of claims 1 to 6 and 9, wherein the switches of the circuit groups in the power circuit are implemented through a bidirectional switch or a controllable switching device.

11. The power circuit based on three-phase power according to any one of claims 1 to 6 and 9, wherein a range of a leakage inductance value of the transformers of the circuit groups in the power circuit is less than 1.5%.

12. The power circuit based on three-phase power according to any one of claims 1 to 6 and 9, wherein the transformers of the circuit groups in the power circuit have a structure of a copper foil or a U-shaped metal sheet, and a parallel winding.

13. A method for implementing power factor correction and dynamic boosting/bucking adjustment in the power circuit based on three-phase power according to any one of claims 1 to 12, wherein the method comprises:

   step S1: obtaining a current actual input current value, a current actual input voltage value, a current actual output voltage value, and a current actual output current value at a high frequency;
   step S2: comparing an obtained current actual output power with a target output power required by a connected load;
   step S3: adjusting an input current peak at a high frequency based on a result of the comparison between the current actual output power and the target output power;
   step S4: determining a target input current value at a high frequency based on the input current peak and current input phase information;
   step S5: comparing the current actual input current value with the target input current value, and determining duty cycle and frequency adjustment instruction information for a switch at a high frequency based on a result of the comparison; and
   step S6: executing, by the switch of a power circuit, the instruction information at a high frequency to control charge and discharge time of an inductor of the power circuit, so that the current actual input current value of the power circuit approaches the target input current value as much as possible.

FIG.1

FIG.2

FIG.3

FIG.4

FIG.5-1

FIG.5-2

FIG.5-3

FIG.5-4

Obtain a current actual input current value, a current actual input voltage value, a current actual output voltage value, and a current actual output current value at a high frequency — S1

Compare an obtained current actual output power with a target output power required by a connected load — S2

Adjust an input current peak at a high frequency based on a result of the comparison between the current actual output power and the target output power — S3

Determine a target input current value at a high frequency based on the input current peak and current input phase information — S4

Compare the current actual input current value with the target input current value, and determine duty cycle and frequency adjustment instruction information for a switch at a high frequency based on a result of the comparison — S5

The switch of a power circuit executes the instruction information at a high frequency to control charge and discharge time of an inductor of the power circuit, so that the current actual input current value of the power circuit approaches the target input current value as much as possible — S6

*FIG.6*

## INTERNATIONAL SEARCH REPORT

| International application No. |
| --- |
| **PCT/CN2023/130210** |

| A. | CLASSIFICATION OF SUBJECT MATTER |
| --- | --- |

H02M1/00(2007.01)i; H02M1/42(2007.01)i; H02M1/088(2006.01)i; H02M3/335(2006.01)i; H02M3/00(2006.01)i

According to International Patent Classification (IPC) or to both national classification and IPC

| B. | FIELDS SEARCHED |
| --- | --- |

Minimum documentation searched (classification system followed by classification symbols)

    IPC: H02M

Documentation searched other than minimum documentation to the extent that such documents are included in the fields searched

Electronic data base consulted during the international search (name of data base and, where practicable, search terms used)

    CNTXT, ENTXTC, ENTXT, DWPI, CNKI, IEEE: 功率因数, 校正, 跟踪, 震荡, 谐振, 高频, 整流, 逆变, power factor, correct, resonance, high-frequency, rectify, inverter

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116846186 A (SHENZHEN CONTEMPORARY E-ENERGY TECHNOLOGY CO., LTD.) 03 October 2023 (2023-10-03)<br>    description, paragraphs 6-211, and figures 1-10 | 1-13 |
| X | CN 112366962 A (HARBIN INSTITUTE OF TECHNOLOGY) 12 February 2021 (2021-02-12)<br>    description, paragraphs 7-173, and figures 1-19 | 1, 3-12 |
| A | CN 115425836 A (RADAR SERGEANT SCHOOL, AIR FORCE EARLY WARNING ACADEMY) 02 December 2022 (2022-12-02)<br>    entire document | 1-13 |
| A | KR 20190106438 A (KOREA ELECTROTECHNOLOGY RESEARCH INSTITUTE) 18 September 2019 (2019-09-18)<br>    entire document | 1-13 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 January 2024** | **22 January 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/130210**

| Patent document cited in search report | | | Publication date (day/month/year) | Patent family member(s) | | | Publication date (day/month/year) |
|---|---|---|---|---|---|---|---|
| CN | 116846186 | A | 03 October 2023 | None | | | |
| CN | 112366962 | A | 12 February 2021 | None | | | |
| CN | 115425836 | A | 02 December 2022 | None | | | |
| KR | 20190106438 | A | 18 September 2019 | KR | 102114673 | B1 | 25 May 2020 |

Form PCT/ISA/210 (patent family annex) (July 2022)